(19) Europäisches Patentamt
European Patent Office
Office européen des brevets

(11) EP 2 845 884 A1

(12) **EUROPEAN PATENT APPLICATION**

(43) Date of publication:
**11.03.2015 Bulletin 2015/11**

(51) Int Cl.:
***C09D 11/033*** *(2014.01)* ***C09D 11/30*** *(2014.01)*

(21) Application number: **14183651.0**

(22) Date of filing: **05.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.09.2013 JP 2013185452**

(71) Applicant: **Canon Finetech Inc.**
**Misato-shi**
**Saitama 341-8527 (JP)**

(72) Inventors:
- **Sumikawa, Yuusuke**
**Misato-shi, Saitama 341-8527 (JP)**
- **Kawakami, Masato**
**Misato-shi, Saitama 341-8527 (JP)**
- **Aoto, Ryuta**
**Misato-shi, Saitama 341-8527 (JP)**
- **Himura, Eriko**
**Misato-shi, Saitama 341-8527 (JP)**
- **Aratani, Kanako**
**Misato-shi, Saitama 341-8527 (JP)**
- **Tsutsui, Takahiro**
**Misato-shi, Saitama 341-8527 (JP)**
- **Suzuki, Shintaro**
**Misato-shi, Saitama 341-8527 (JP)**

(74) Representative: **TBK**
**Bavariaring 4-6**
**80336 München (DE)**

(54) **Ink jet recording ink, ink jet recording method, ink jet recording head, and ink jet recording apparatus**

(57) An ink jet recording ink including a coloring material; water; and three kinds of water-soluble compounds. The content of the water is 70 mass% or more with respect to the total amount of the ink. Each water-soluble compound has a molecular weight of 80 or more and is a liquid compound having a vapor pressure at 20°C of 5 Pa or less or a solid compound, and at least one kind of the water-soluble compounds is a solid compound. In case that the water-soluble compounds are mixed at a ratio at which the water-soluble compounds are incorporated into the ink to provide a mixture, a 40% aqueous solution of the mixture has a water activity value of 0.88-0.91 and a viscosity of 3.3 mPa·s or less. The total content of the water-soluble compounds in the ink is 20-25 mass% with respect to the total amount of the ink.

EP 2 845 884 A1

## Description

BACKGROUND OF THE INVENTION

Field of the Invention

The present invention relates to an ink jet recording ink, and to an ink jet recording method, an ink jet recording head, and an ink jet recording apparatus using the ink jet recording ink. In particular, the present invention relates to a technology suitable for ink jet recording of a thermal system, and among others, a technology suitable for a line type recording head.

Description of the Related Art

Ink jet recording apparatus have advantages in their low noise, low running cost, easiness of downsizing, easiness of small-lot full-color printing, and the like, and are currently widely applied not only to a printer but also to a copying machine and the like. The ink jet recording apparatus are widely used for home use, for business use, and for industrial use.

As a recording system for the ink jet recording apparatus, a thermal system and a piezoelectric system are known. Among others, the thermal system, in which ink is ejected by generating an air bubble in ink in a nozzle through heating, has advantages in a relatively simple head structure, high printing speed, high density of print pixels, and the like. Further, a structure of an ink jet recording head (also referred to as a recording head or simply referred to as a head) has also been progressed. In addition to a related-art serial system, in which printing is carried out by horizontally reciprocating the head while a sheet is fed, a line system is becoming adopted, in which a long head corresponding to a width of a sheet is used and printing is carried out under a state in which only the sheet is fed without moving the head. In the line system, a sheet is fed under a fixed long head so that printing can be carried out in a stroke. Thus, the line system is suitable for high-speed printing and is becoming adopted in the fields of large-format printing and printers for industrial use, in which high image quality and high-speed printing are required.

In the ink jet recording method of the thermal system, water evaporates from the ink in the nozzle when heated to increase the viscosity of the ink, which may cause nozzle clogging and sticking of the ink to the head. Thus, there is a problem in that an image defect is liable to be caused due to ejection failure of the ink, dot misalignment, or the like. On the other hand, in the above-mentioned serial system, the inside of the nozzle is always kept in a fresh state by operation of ejecting, toward a cap, ink in the nozzle that is thickened by evaporation (preparatory ejection) every time a scan ends. However, in the case of the line system, the head is fixed, and thus, recovery operation such as the preparatory ejection that is carried out in the serial system cannot be carried out. When nozzle clogging or ink sticking is caused in a head of the line system, it is necessary to stop the printing and recover the state of the head so that ink is normally ejected from a nozzle array. In the case of the head of the line system, when the recovery operation of the head is frequently carried out, the printing needs to be stopped every time the recovery operation is carried out, which reduces productivity.

In view of the above-mentioned circumstances, in particular, in an ink jet recording method using the head of the line system, ink and a head to be used are required to be designed so that the operation for recovering the head to a normal state of ejecting ink is not required to be carried out frequently. Above all, in order to print an image with stability and without reducing the productivity, improvement of the ability to prevent an image defect due to nozzle clogging even when ink in a nozzle of the head is exposed to the air, that is, the ability to extend guaranteed exposure time, within which no image defect is caused as a result of unsatisfactory ink ejection due to thickening of the ink by the exposure (the ability is hereinafter also referred to as "first-ejection property", and is expressed by the above-mentioned exposure time (in seconds), and as the time becomes longer, the ink is regarded as having more satisfactory "first-ejection property"), is required to a greater extent than in the case of using a head of the serial system.

On the other hand, as a method of improving the first-ejection property in terms of composition of the ink jet recording ink, use of ink containing no water, such as oil-based ink or solid ink, is conceived. However, from the viewpoint of safety, influence on the environment, and energy saving, aqueous ink is more demanded. Hitherto, development of aqueous ink with improved first-ejection property is therefore demanded. However, as described above, when the head of the line system is used, improvement in the first-ejection property is required to a greater extent than in the case of ink used in the related-art head of the serial system. To inhibit nozzle clogging, various kinds of proposals have been made as described below.

As aqueous ink jet recording ink that suppresses clogging of an ejection orifice, for example, recording liquid (ink) having a feature in a water activity (Aw) of 0.70 to 0.90 has been proposed (Japanese Patent Application Laid-Open No. S61-157566). Japanese Patent Application Laid-Open No. S61-157566 describes that, in the above-mentioned structure, the solid content is less liable to be precipitated out of the ink and the ink is less liable to change the physical

properties thereof while the ink is stored, and that nozzle clogging is less liable to occur.

Further, aqueous ink jet recording ink has been proposed, which contains a water-soluble compound exhibiting a hydrophilicity-hydrophobicity coefficient of 0.26 or more determined by the water activity value thereof, and defines therein the total amount of anionic functional groups of a self-dispersed pigment and the amount of cesium ions contained in the ink (Japanese Patent Application Laid-Open No. 2011-195826). Japanese Patent Application Laid-Open No. 2011-195826 describes that, in the above-mentioned structure, while the ink is promptly permeated in plain paper, an obtained image has a high optical density, and further, nozzle clogging is inhibited.

However, detailed studies conducted by the inventors of the present invention have revealed that, in the technologies described in Japanese Patent Application Laid-Open Nos. S61-157566 and 2011-195826, the water activity value of the ink becomes larger in a later period of evaporation, in which evaporation of water in the ink proceeds through heating, and those related art technologies do not attain high first-ejection property that is in particular necessary for the head of the line system. As described above, even in the same ink jet recording of the thermal system, required performance against nozzle clogging differs between a case of using the head of the line system and a case of using the head of the serial system because of the difficulty in recovery operation. When the head of the line system is used, improvement in the first-ejection property is required to a greater extent. However, even the above-mentioned related art technologies do not attain the required performance. Further, demand for higher image quality in ink jet recording in recent years reduces the size of an ink droplet to be ejected so that the opening area of a nozzle tends to be reduced. In terms of this point as well, inhibition of nozzle clogging is an important challenge to be addressed.

## SUMMARY OF THE INVENTION

In view of the above, an object of the present invention is to provide an aqueous ink jet recording ink capable of improving first-ejection property thereof and effectively inhibiting nozzle clogging in a recording head, which is a problem in particular for ink jet recording ink of a thermal system, and is not only a problem in a case of a recording head of a serial system but also a serious problem in a case of a recording head of a line system, in which recovery operation cannot be carried out unless printing is stopped.

The above-mentioned object is attained by an ink jet recording ink, an ink jet recording method, an ink jet recording head, and an ink jet recording apparatus according to the present invention, which have the following structures, respectively.

[1] Ink jet recording ink:

According to an embodiment of the present invention, there is provided an ink jet recording ink, including: a coloring material; water; and three kinds of water-soluble compounds, in which a content of the water is 70 mass% or more with respect to a total amount of the ink, in which each of the three kinds of water-soluble compounds has a molecular weight of 80 or more and is a liquid compound having a vapor pressure at 20°C of 5 Pa or less or a solid compound, and at least one kind of the three kinds of water-soluble compounds is a solid compound, in which in case that the three kinds of water-soluble compounds are mixed at a ratio at which the three kinds of water-soluble compounds are incorporated into the ink to provide a mixture, a 40% aqueous solution of the mixture has a water activity value of 0.88 or more and 0.91 or less and a viscosity of 3.3 mPa·s or less, and in which a total content of the three kinds of water-soluble compounds in the ink is 20 mass% or more and 25 mass% or less with respect to the total amount of the ink.

According to the present invention, by improving the composition of the ink, it is possible to provide the aqueous ink jet recording ink capable of improving the first-ejection property thereof and effectively inhibiting the nozzle clogging in the recording head, which is the problem in particular for the ink jet recording ink of the thermal system, and is not only the problem in the case of the recording head of the serial system but also the serious problem in the case of the recording head of the line system, in which the recovery operation cannot be carried out unless the printing is stopped.

## BRIEF DESCRIPTION OF THE DRAWINGS

FIG. 1A is a top view schematically illustrating an internal structure of nozzles of a recording head.
FIG. 1B is a side view schematically illustrating the internal structure of the nozzle illustrated in FIG. 1A.
FIG. 1C is a front view schematically illustrating an ink ejection orifice of the nozzle illustrated in FIG. 1A.
FIG. 2A is a front view schematically illustrating a recording head according to the present invention.
FIG. 2B is a sectional view illustrating the recording head taken along the line IIB-IIB of FIG. 2A.
FIG. 2C is a sectional view illustrating the recording head taken along the line IIC-IIC of FIG. 2A.
FIG. 3 is an enlarged sectional view illustrating an ink tank.

FIG. 4 is an enlarged sectional view of the recording head.
FIG. 5A is an enlarged perspective view illustrating an ink retaining member illustrated in FIG. 4.
FIG. 5B is a sectional view illustrating the ink retaining member taken along the line VB-VB of FIG. 5A.
FIG. 6 is a schematic structural view schematically illustrating an entire structure of an ink jet recording apparatus.
FIG. 7 is a block diagram illustrating a control system of the recording apparatus illustrated in FIG. 6.
FIG. 8 is a flow chart illustrating steps of a recovery sequence of the recording head.

DESCRIPTION OF THE EMBODIMENTS

Now, the present invention is described in detail. However, the present invention is not limited to the following embodiments and comprehends all objects having matters to define the invention. Note that, the term "recording" as used herein comprehends not only the case where meaningful information such as a letter, a figure, or a symbol is formed on a recording medium but also the case where an image, design, pattern, or the like having no particular meaning is formed thereon.

The inventors of the present invention have made extensive studies to solve the problems of the prior art described in the foregoing. As a result, the inventors have found that improving the design of ink composition, in particular, the composition of a water-soluble compound to be incorporated can provide an ink jet recording ink (hereinafter sometimes simply referred to as "ink") capable of markedly improving the first-ejection property that has been an important problem particularly in a head of a line system in which a recovery operation cannot be frequently performed because printing needs to be stopped, and thus the inventors have reached the present invention. An ink provided by the present invention, which exhibits a good effect irrespective of whether a coloring material is a dye or a pigment, is effective particularly in a pigment ink having a bad first-ejection property.

The reason why the inventors have reached the present invention is described below. As described in the foregoing, for example, in the ink described in Japanese Patent Application Laid-Open No. S61-157566, an ink having a water activity (Aw) of from 0.70 to 0.90 is said to hardly cause the clogging of a nozzle. According to a study made by the inventors of the present invention, however, the problem of the clogging of the nozzle may not be alleviated even with such ink, and hence a good first-ejection property cannot be stably secured and the first-ejection property particularly in ink jet recording of a thermal system involving using a head of a line system is poor. Accordingly, the inventors have acknowledged that the development of the following ink is urgent: even when applied to a head of the line system, the ink eliminates the need for frequently stopping printing for a nozzle recovery operation, does not cause an image defect such as the dot misalignment of an image, and can stably form a good image.

To this end, the inventors of the present invention have made extensive studies. As a result, the inventors have conceived that although the water activity value of an ink itself (ink before printing) is specified in the prior art, the problem of the first-ejection property results from the thickening of the ink caused by an increase in viscosity of the ink due to the evaporation of water in the ink, and hence it is important to design the constitution of the ink so that the properties of the ink in the thickened state (ink during printing) are improved, and thus the inventors have made a further study. As a result, the inventors have found that when the number of kinds of water-soluble compounds to be incorporated into an ink is set to three and those three kinds of water-soluble compounds are mixed at a ratio at which the compounds are incorporated into the ink to provide a mixture, the ink containing those water-soluble compounds is turned into an ink showing a good first-ejection property by designing the characteristics of the mixture so that when a water activity value in a 40% aqueous solution of the mixture is set to 0.88 or more and 0.91 or less under the assumption that water in the ink may evaporate, the solution may hardly evaporate in this state and its viscosity may be 3.3 mPa·s or less, i.e., the solution may hardly thicken, and thus the inventors have reached the present invention.

It is of course favorable to achieve the characteristics specified in the present invention by using one kind of water-soluble compound instead of the above-mentioned constitution, if possible. However, kinds of water-soluble compounds that can be used in an ink jet recording aqueous ink are limited because of other required performance, and hence it is extremely difficult to achieve the condition by using one kind. Accordingly, in the present invention, three kinds of water-soluble compounds are used. Further, in the present invention, in order that a significant effect of the present invention is achieved by easily and stably realizing the required performance, each of the three kinds of water-soluble compounds constituting the ink of the present invention is a solid compound, or a compound that hardly evaporates under that condition and has a vapor pressure at 20°C of 5 Pa or less. Further, in order that the thickening of the ink is suppressed, at least one kind of the three kinds is a solid compound and compounds having molecular weights of 80 or more are used so that the number of moles of the water-soluble compounds in the ink is not excessively large. In addition, the total amount of those three kinds of water-soluble compounds in the ink is set to 20 mass% or more and 25 mass% or less. An ink characterizing the present invention is described below.

[1] Ink jet recording ink:

An ink jet recording ink of the present invention, which contains a coloring material, three kinds of water-soluble compounds, and water, as essential components, may contain a surfactant, or any other solvent or additive as required. Each component is described below.

[1-1] Three kinds of water-soluble compounds:

The main feature of the ink of the present invention lies in that the respective water-soluble compounds showing the following characteristics are used, and the characteristics and total content of the mixture of those three kinds are those specified in the present invention.

Each of the three kinds of water-soluble compounds to be used in the present invention is a compound having a vapor pressure at 20°C of 5 Pa or less, or a solid compound. Further, at least one kind thereof needs to be a solid compound. All of the three kinds may be solid compounds as long as the water activity value and viscosity of the mixture to be described later fall within ranges specified in the present invention. The reason why a water-soluble compound to be used in the present invention has a vapor pressure at 20°C of 5 Pa or less is as follows: a water-soluble compound having a vapor pressure at 20°C of more than 5 Pa is liable to evaporate, and hence it becomes difficult to achieve the water activity value and viscosity specified in the present invention in a mixture containing the compound. In the present invention, setting the vapor pressure of a water-soluble compound to be used at 20°C to 5 Pa or less, more preferably 2.5 Pa or less can achieve the ranges of the water activity value and viscosity of the mixture specified in the present invention. As a result, the ink can realize a good and stable first-ejection property at the time of printing.

Molecular weight

The molecular weights of the water-soluble compounds to be used in the present invention need to be 80 or more. A molecular weight of less than 80 is not preferred because the number of moles of the compounds corresponding to the addition amount increases and hence the solubility of any other component to be used in combination reduces. The use of a water-soluble compound having a molecular weight of 80 or more can provide sufficient fixability.

Water activity value of 40% aqueous solution

The ink of the present invention is constituted so that the water activity value of a 40% aqueous solution of the mixture of the three kinds of water-soluble compounds having the above-mentioned characteristics to be incorporated into the ink falls within the range of from 0.88 or more to 0.91 or less. The water activity value specified in the present invention is a value showing the proportion of free water in a sample represented by Equation 1. Here, the free water is water that easily evaporates owing to a change in temperature or humidity of an environment, and is a main cause for the evaporation of the ink in a nozzle. As described in the foregoing, in the ink of the present invention, the three kinds of water-soluble compounds to be used in the ink are selected so that in a mixture in which the three kinds of water-soluble compounds are mixed in formulation to be used in the ink, the water activity value of such a high concentration 40% aqueous solution that the evaporation of water that occurs during printing is assumed is 0.88 or more and 0.91 or less, more preferably 0.88 or more and 0.905 or less. That is, constituting the three kinds of water-soluble compounds to be incorporated into the ink as described above reduces the proportion of the free water in a state where the evaporation of the water in the ink that occurs upon performance of printing has progressed, suppresses the evaporation of the water in a later stage of the evaporation where the evaporation of the ink has sufficiently progressed, and achieves excellent first-ejection property. The water activity value of the 40% aqueous solution of the mixture of the three kinds of water-soluble compounds in the present invention is a numerical value measured with an Aqua-Lab CX-3TE (manufactured by DECAGON) based on a chilled mirror dew point-measuring method at 25°C.

$$\text{Water activity value} = (\text{vapor pressure of ink})/(\text{vapor pressure of pure water}) \quad \text{(Equation 1)}$$

Viscosity of 40% aqueous solution

The viscosity of the 40% aqueous solution of the mixture of the three kinds of water-soluble compounds specified in the present invention is 3.3 mPa • s or less. One possible main cause for a reduction in the first-ejection property is thickening in association with the evaporation of the water in the ink that occurs during printing. According to a study

made by the inventors of the present invention, in the ink of the present invention, when the water-soluble compounds constituting the ink are selected so that the viscosity of the 40% aqueous solution of the mixture of the three kinds of water-soluble compounds falls within the range of 0.33 or less in which the degree of the thickening is low, more preferably 0.30 or less, the low viscosity of the ink can be maintained even in a state where the evaporation of the water from the ink has progressed, and hence an excellent first-ejection property can be achieved. The viscosity of the 40% aqueous solution of the mixture in the present invention means a value measured in conformity with JIS Z 8803 under the condition of a temperature of 25°C with an E-type viscometer (for example, an "RE-80L Viscometer" manufactured by Toki Sangyo Co., Ltd.).

Exemplified water-soluble compound

Specific examples of the water-soluble compounds that can be used in the ink of the present invention include the following compounds. A compound not described below may also be used as long as the compound satisfies the conditions.

(1) Polyhydric alcohols:

Alkanediols such as butanediol (1,2-, 1,3-, or 1,4-butanediol) (molecular weight=90), 1,5-pentanediol (molecular weight=104), and hexanediol (1,2- or 1,6-hexanediol) (molecular weight=118);
condensates of alkanediols such as diethylene glycol (molecular weight=106), triethylene glycol (molecular weight=150), tetraethylene glycol (molecular weight=194), dipropylene glycol (molecular weight=134), tripropylene glycol (molecular weight=192), polyethylene glycol (molecular weight=200 to 600), and polypropylene glycol (molecular weight=about 700); and
polyhydric alcohols other than the alkanediols such as glycerin (molecular weight=92), trimethylolpropane (molecular weight=134), trimethylolethane (molecular weight=120), 1,2,6-hexanetriol (molecular weight=134), and thiodiglycol (molecular weight=122).

(2) Glycol ethers:

A monomethyl ether (molecular weight=164), monoethyl ether (molecular weight=178), and monobutyl ether (molecular weight=206) of triethylene glycol; and a monomethyl ether (molecular weight=208), monoethyl ether (molecular weight=222), and monobutyl ether (molecular weight=250) of tetraethylene glycol.

(3) Carboxylic acid amides:

N,N-dimethylacetamide (molecular weight=87).

(4) Heterocycles:

Nitrogen-containing heterocycles such as 2-pyrrolidone (molecular weight=85) and 1,3-dimethyl-2-imidazolidinone (N,N'-dimethylethyleneurea) (molecular weight=114); and sulfur-containing heterocycles such as sulfolane.

(5) Alkanolamines:

Diethanolamine (molecular weight=105) and triethanolamine (molecular weight=149).

(6) Urea derivative:

Ethylene urea (molecular weight=86).

(7) Sulfur-containing compound:

Bishydroxyethyl sulfone (molecular weight=154).

In the ink of the present invention, the mixture of the water-soluble compounds more preferably contains at least one kind selected from the group consisting of glycerin, ethylene urea, triethylene glycol, and bishydroxyethyl sulfone out of those described above from the viewpoint of the realization of a good first-ejection property. The ink of the present invention, which needs to contain at least a solid water-soluble compound, preferably contains ethylene urea as the solid water-soluble compound.

Content of water-soluble compounds

The ink of the present invention is such that the total content of the mixture of the water-soluble compounds is 20 mass% or more, more preferably 25 mass% or less with respect to the total amount of the ink. Setting the content to 20 mass% or more with respect to the total amount of the ink reduces the molar ratio of the water in the ink, and hence can suppress the evaporation of the water at the initial stage of the evaporation and can improve the first-ejection property. Setting the content to 25 mass% or less with respect to the total amount of the ink provides a viscosity-reducing effect.

[1-2] Coloring material:

The ink of the present invention contains a coloring material. The coloring material may be any one of a pigment and a dye. The pigment may be any one of an inorganic pigment and an organic pigment, and may be a resin-dispersed pigment or may be a self-dispersible pigment. Note that, not only a conventionally known pigment or dye to be described later but also a newly synthesized or produced pigment or dye may be used as the pigment or the dye. The effects of the present invention to be obtained become additionally significant particularly in the case of an ink using the pigment, which has involved a significant problem in terms of the first-ejection property, as a coloring material. The pigment is preferred also because an image to be formed is excellent in weatherability. The resin-dispersed pigment that makes an image excellent in fastness properties such as scratch resistance is more preferred. Further, additionally significant effects are obtained when the coloring material is one obtained by causing a (meth)acrylate-based copolymer of a random structure to adsorb to a pigment surface and dispersing the resultant in an aqueous medium. Such resin-dispersed pigment may be produced by an ordinary method and may be obtained by, for example, a method disclosed in Japanese Patent No. 4956917.

[1-2A-1] Pigment:

Examples of the pigment related to the present invention include carbon black and an organic pigment. In addition, one kind of those pigments may be used, or two or more kinds thereof may be used in combination.
Specific examples of the carbon black include carbon black pigments such as furnace black, lamp black, acetylene black, and channel black. There may be used, for example, a carbon black pigment having a brand name such as Raven (manufactured by Columbian Chemicals Co.), Black Pearls L, Regal, Mogul L, Monarch, or Valcan (manufactured by Cabot Corporation), Color Black, Printex, or Special Black (manufactured by Degussa), or Mitsubishi Carbon Black (manufactured by Mitsubishi Chemical Corporation) as a trade name. It should be appreciated that the carbon black is not limited thereto, and conventionally known carbon black may also be used. In terms of physical properties, the carbon black to be used in the present invention is preferably a carbon black having a primary particle diameter of 10 nm or more and 40 nm or less, a specific surface area based on a BET method of from 50 to 400 $m^2/g$ or less, a DBP oil absorption of from 40 to 200 ml/100 g or less, a volatile content of from 0.5 to 10%, and a pH of from 2 to 9. The carbon black having such characteristics acts on the effects of the present invention in a particularly effective manner. Note that, the DBP oil absorption is measured by JIS K 6221 A method.
Specific examples of the organic pigment may include: insoluble azo pigments such as toluidine red, toluidine maroon, hansa yellow, benzidine yellow, and pyrazolone red; soluble azo pigments such as lithol red, helio bordeaux, pigment scarlet, and permanent red 2B; derivatives of a vat dyestuff such as alizarin, indanthrone, and thioindigo maroon; phthalocyanine-based pigments such as phthalocyanine blue and phthalocyanine green; quinacridone-based pigments such as quinacridone red and quinacridone magenta; perylene-based pigments such as perylene red and perylene scarlet; isoindolinone-based pigments such as isoindolinone yellow and isoindolinone orange; imidazolone-based pigments such as benzimidazolone yellow, benzimidazolone orange, and benzimidazolone red; pyranthrone-based pigments such as pyranthrone red and pyranthrone orange; thioindigo-based pigments; condensed azo-based pigments; and other pigments such as flavanthrone yellow, acylamide yellow, quinophthalone yellow, nickel azo yellow, copper azomethine yellow, perinone orange, anthrone orange, dianthraquinonyl red, and dioxazine violet.
In addition, examples of the organic pigment indicated by a color index (C.I.) number may include the following pigments. It should be understood that in addition to the following, a conventionally known organic pigment may be used.
C.I. Pigment Yellow: 12, 13, 14, 17, 20, 24, 74, 83, 86, 93, 109, 110, 117, 120, 125, 128, 137, 138, 147, 148, 151, 153, 154, 166, and 168
C.I. Pigment Orange: 16, 36, 43, 51, 55, 59, and 61
C.I. Pigment Red: 9, 48, 49, 52, 53, 57, 97, 122, 123, 149, 168, 175, 176, 177, 180, 192, 215, 216, 217, 220, 223, 224, 226, 227, 228, 238, and 240
C.I. Pigment Violet: 19, 23, 29, 30, 37, 40, and 50
C.I. Pigment Blue: 15, 15:1, 15:3, 15:4, 15:6, 22, 60, and 64

C.I. Pigment Green: 7 and 36
C.I. Pigment Brown: 23, 25, and 26

[1-2A-2] Resin that functions as dispersant:

When a pigment is used as the coloring material of the ink of the present invention, resin-dispersed pigments obtained by dispersing the pigments listed above with resin dispersants are preferably used. Of those, a resin-dispersed pigment obtained by dispersing any such pigment with a (meth)acrylate-based copolymer is preferably used from the viewpoint of the ejection property. The (meth)acrylate-based copolymer to be used at this time can be obtained by copolymerizing (meth)acrylic acid, a (meth)acrylate, and a monoethylenically unsaturated monomer copolymerizable with the foregoing. (Meth)acrylic acid comprehends acrylic acid and methacrylic acid. Of those, methacrylic acid is preferably used in consideration of its nature that the range in which its electrically neutral state and its anion state coexist can be widely controlled. Examples of the (meth)acrylate-based copolymer include structures such as a random copolymer, a block copolymer, and a graft copolymer. Of those, a random copolymer is preferably used. This is because a copolymer except the random copolymer, for example, the block copolymer involves another problem. That is, the hydrophilicity of the pigment often rises and hence a formed printed image is often poor in water resistance.

[1-2A-3] Monomer component for producing resin:

(Meth)acrylic acid comprehends acrylic acid and methacrylic acid. Of those, methacrylic acid is preferred in consideration of the nature that the range in which its electrically neutral state and its anion state coexist can be widely controlled, its easy availability, its price, and the like. Examples of the (meth)acrylate include: alkyl (meth)acrylates such as methyl (meth)acrylate, n-butyl (meth)acrylate, 2-ethylhexyl (meth)acrylate, n-octyl (meth)acrylate, dodecyl (meth)acrylate, octadecyl (meth)acrylate, cyclohexyl (meth)acrylate, and isobornyl (meth)acrylate; hydroxyalkyl (meth)acrylates such as 2-hydroxyethyl (meth)acrylate, 2-hydroxypropyl (meth)acrylate, and 3-hydroxypropyl (meth)acrylate; alkylene glycol mono(meth)acrylates such as diethylene glycol mono(meth)acrylate, triethylene glycol mono(meth)acrylate, polyethylene glycol mono(meth)acrylate, propylene glycol mono(meth)acrylate, dipropylene glycol mono(meth)acrylate, tripropylene glycol mono(meth)acrylate, tetramethylene ether glycol mono(meth)acrylate, a mono(meth)acrylate of random polymer glycol or block polymer glycol of polyethylene oxide-polypropylene oxide, and a mono(meth)acrylate of random polymer glycol or block polymer glycol of polyethylene oxide-polytetramethylene ether; glycidyl (meth)acrylate; and benzyl (meth)acrylate.

In addition to the (meth)acrylic acid, (meth)acrylate, and monoethylenically unsaturated monomer, a styrene-based monomer may also be incorporated into the (meth)acrylate-based copolymer to be used in the ink of the present invention. Herein, examples of the styrene-based monomer include styrene, $\alpha$-methylstyrene, o-methylstyrene, m-methylstyrene, p-methylstyrene, p-t-butylstyrene, 4-methoxystyrene, and 4-chlorostyrene. That is, the (meth)acrylate copolymer is preferably a styrene-(meth)acrylic acid-based copolymer containing a styrene-based monomer.

[1-2A-4] Characteristics of resin:

The weight-average molecular weight (Mw) of the (meth)acrylate-based copolymer to be used in the ink of the present invention in terms of styrene preferably falls within the range of from 6,000 to 12,000, and more preferably falls within the range of from 7,000 to 9,000. When the weight-average molecular weight is set to fall within that range, the dispersion stability of the resin-dispersed pigment is improved, its viscosity can be set to a low value, kogation in a heater portion is suppressed, and printing can be stably performed for a long time period. The case where the weight-average molecular weight is less than 6,000 is not preferred because the dispersion stability of the aqueous resin-dispersed pigment itself reduces. In addition, the case where the weight-average molecular weight exceeds 12,000 is not preferred because the following tendency is observed: the viscosity of the aqueous resin-dispersed pigment increases and its dispersibility reduces. Further, this case is not preferred because the kogation in the heater portion worsens, which is responsible for the occurrence of the ejection failure of an ink droplet from the tip of a nozzle of an ink jet printer of a thermal system.

A copolymer having an acid value of 100 mgKOH/g or more and 160 mgKOH/g or less is used as the (meth)acrylate-based copolymer to be used in the ink of the present invention. A copolymer having an acid value of 110 mgKOH/g or more and 150 mgKOH/g or less is more preferably used. When the acid value exceeds 160 mgKOH/g, the hydrophilicity of the pigment rises and hence the pigment begins to dissolve owing to the adhesion of water or the like to be liable to cause the bleeding of a printed article. In addition, when the acid value is less than 100 mgKOH/g, the ejection stability of an aqueous pigment ink in the thermal system of an ink jet printer tends to reduce. Here, the acid value refers to the amount (mg) of KOH required for neutralizing 1 g of the resin and can be an indicator representing its hydrophilicity. Although the acid value in this case can be determined by calculation from a composition ratio between the respective

monomers constituting the resin dispersant, the acid value of the resin-dispersed pigment can be measured by, for example, a measuring method involving using a Titrino (manufactured by Metrohm) that determines the acid value through potentiometric titration.

[1-2A-5] Resin-dispersed pigment

The resin-dispersed pigment to be used in the coloring material constituting the ink of the present invention can be prepared by, for example, covering any one of the pigments listed in the foregoing with the (meth)acrylate-based polymer as described above. With regard to the average particle diameter of the resin-dispersed pigment to be used in the present invention, a value thereof determined by a dynamic light scattering method in a liquid is preferably 70 nm or more and 150 nm or less, more preferably 80 nm or more and 120 nm or less. A particle diameter in excess of 150 nm is not preferred because the sedimentation of the ink is promoted and hence the longterm dispersion stability of the pigment is impaired. On the other hand, a particle diameter of less than 70 nm is not preferred because color developability sufficient for the formation of an image or sufficient weatherability of the resultant image cannot be obtained. The average particle diameter can be measured by, for example, a measuring method involving using an FPAR-1000 (manufactured by Otsuka Electronics Co., Ltd., analysis by a cumulant method) or Nanotrac UPA 150EX (manufactured by NIKKISO CO., LTD., a 50% integrated value is adopted) utilizing the scattering of laser light.

In addition, the addition amount of the resin-dispersed pigment in the ink is preferably 0.5 mass% or more and 10 mass% or less, more preferably 1.0 mass% or more and 8.0 mass% or less, still more preferably 1.5 mass% or more and 6.0 mass% or less with respect to the total amount of the ink. A pigment concentration of less than 0.5 mass% is not preferred because color developability sufficient for the formation of an image cannot be obtained. In addition, a pigment concentration in excess of 10.0 mass% is not preferred because the viscosity of the aqueous pigment ink increases and hence it becomes difficult to eject the ink.

[1-2A-6] Amount of resin with respect to pigment:

When the resin-dispersed pigment as described above is applied to the coloring material in the ink of the present invention, the ratio of the (meth)acrylate-based copolymer to the pigment is preferably adjusted as follows from the viewpoints of maintaining the dispersibility of a dispersion and maintaining the viscosity of the pigment ink at a low value: the amount of the (meth)acrylate-based copolymer falls within the range of from 0.2 to 1.0 part by mass with respect to 1 part by mass of the pigment in terms of mass.

[1-2A-7] Method of producing resin-dispersed pigment

Although the resin-dispersed pigment as described above to be used in the coloring material of the ink of the present invention can be obtained by such a production method as described below, an acid precipitation step is preferably incorporated as a method of covering the pigment with the (meth)acrylate-based polymer into the production method. The acid precipitation step to be performed at this time is to acidify a liquid medium containing the pigment and the (meth)acrylate-based copolymer dissolved in an aqueous solution of a basic substance by addition of an acidic substance to return an anionic group in the (meth)acrylate-based copolymer to a functional group before neutralization, thereby precipitating the polymer.

The acid precipitation step to be performed at this time is specifically, for example, the step of acidifying an aqueous dispersion, which has been obtained through a dispersion step and a distillation step to be performed as required, by addition of an acid such as hydrochloric acid, sulfuric acid, or acetic acid to form a base and a salt, thereby precipitating the dissolved (meth)acrylate-based copolymer on the surface of a pigment particle. Performing such step can additionally improve an interaction between the pigment and the (meth)acrylate-based copolymer. As a result, a form in which pigment particles are dispersed in an aqueous dispersion medium can be established, and the aqueous resin-dispersed pigment can be caused to freely exhibit additionally excellent effects in terms of physical properties such as the level of final dispersion, the time period needed for the dispersion, and the dispersion stability; and use suitability such as solvent resistance. An aqueous resin-dispersed pigment additionally excellent in dispersion stability can be obtained by: performing a filtration step of separating a precipitate obtained to have improved interaction by filtration; more preferably performing a washing step of washing the precipitate after the completion of the filtration step to remove a free polymer present in the resin-dispersed pigment without adsorbing thereto; and performing a redispersion step of dispersing the remainder in the aqueous medium together with the basic substance again.

[1-2B] Dye:

The ink of the present invention can use a dye as its coloring material. In addition, the molecular structure or

the like of the dye in this case is not particularly limited, but a water-soluble dye is preferably used. For example, black dyes, yellow dyes, magenta dyes, and cyan dyes listed below may be suitably used. However, the present invention is not limited thereto, and a dye disclosed in the gazette of Japanese Patent Application Laid-Open No. 2011-140636, Japanese Patent Application Laid-Open No. 2006-143989, Japanese Patent Application Laid-Open No. H06-25573, EP 0468647 A1, EP 0468648 A1, EP 0468649 A1, or the like may also be used in addition to those dyes.

Examples of the black dyes may include:

(1) acid dyes such as C.I. Acid Black 2, 48, 51, 52, 110, 115, and 156;
(2) direct dyes such as C.I. Direct Black 17, 19, 22, 31, 32, 51, 62, 71, 74, 112, 113, and 168;
(3) reactive dyes such as C.I. Reactive Black 1, 8, 12, and 13; and
(4) edible dyes such as C.I. Food Black 1 and 2.

Examples of the yellow dyes may include:

(1) acid dyes such as C.I. Acid Yellow 11, 17, 23, 25, 29, 42, 49, 61, and 71; and
(2) direct dyes such as C.I. Direct Yellow 12, 24, 26, 44, 86, 87, 98, 100, 130, and 142.

Examples of the magenta dyes may include:

(1) acid dyes such as C.I. Acid Red 1, 6, 8, 32, 35, 37, 51, 52, 80, 85, 87, 92, 94, 115, 180, 254, 256, 289, 315, and 317; and
(2) direct dyes such as C.I. Direct Red 1, 4, 13, 17, 23, 28, 31, 62, 79, 81, 83, 89, 227, 240, 242, and 243.

Examples of the cyan dyes may include:

(1) acid dyes such as C.I. Acid Blue 9, 22, 40, 59, 93, 102, 104, 113, 117, 120, 167, 229, 234, and 254; and
(2) direct dyes such as C.I. Direct Blue 6, 22, 25, 71, 78, 86, 90, 106, and 199.

The addition amount of any such dye as listed above in the ink is preferably 0.5 mass% or more and 10 mass% or less, more preferably 1.0 mass% or more and 8.0 mass% or less, still more preferably 1.5 mass% or more and 6.0 mass% or less with respect to the total amount of the ink. A dye concentration of less than 0.5 mass% is not preferred because color developability sufficient for the formation of an image cannot be obtained. In addition, a dye concentration in excess of 10.0 mass% is not preferred because the viscosity of the ink increases and hence it becomes difficult to eject the ink.

[1-3] Water:

The ink of the present invention contains water. Deionized water (ion-exchanged water) is preferably used as the water. The ink of the present invention is constituted so that its water content is 70 mass% or more with respect to the entirety of the ink. According to a study made by the inventors of the present invention, specifying the water content as described above can effectively suppress thickening caused by the evaporation of the water in the ink that occurs during printing, and hence provides a viscosity-reducing effect. Further, constituting the ink as described above provides a sufficient foaming property of the ink in a thermal system and hence improves the ejection property of the ink.

[1-4] Surfactant:

In the present invention, a surfactant may be further incorporated into the ink including the above-mentioned components as required for the purposes of controlling the surface tension of the ink to be described later to arbitrarily control the bleeding degree or permeability of the ink in a recording medium or to improve the wettability of the ink in a head; and preventing the kogation of the ink on a heater surface to improve its ejection. Although such surfactant is not particularly limited, examples thereof may include the following surfactants. Note that, one kind of those surfactants may be used alone, or two or more kinds thereof may be used in combination.

Nonionic surfactant

A polyoxyethylene alkyl ether, a polyoxyethylene fatty acid ester, a polyoxyethylene alkylphenyl ether, a polyoxyethylene-polyoxypropylene block copolymer, and the like. A fatty acid diethanolamide, an acetylene glycol ethylene oxide adduct, an acetylene glycol-based surfactant, and the like.

Anionic surfactant

A polyoxyethylene alkyl ether sulfuric acid ester salt, a polyoxyethylene alkyl ether sulfonic acid salt, a polyoxyethylene alkylphenyl ether sulfuric acid ester salt, a polyoxyethylene alkylphenyl ether sulfonic acid salt, and the like. An $\alpha$-sulfofatty acid ester salt, an alkylbenzenesulfonic acid salt, an alkylphenolsulfonic acid salt, an alkylnaphthalenesulfonic acid salt, an alkyltetralinsulfonic acid salt, a dialkylsulfosuccinic acid salt, and the like.

Cationic surfactant

An alkyltrimethylammonium salt, a dialkyldimethylammonium chloride, and the like.

Amphoteric surfactant

An alkylcarboxybetaine and the like.
Of those, an acetylene glycol-based surfactant, a polyoxyethylene alkyl ether, or the like is particularly preferably used because the ejection stability of the ink can be improved.
A compound (1) represented by the following general formula (1) (2,4,7,9-tetramethyl-5-decyne-4,7-diol, or an ethylene oxide adduct thereof) may be used as the acetylene glycol-based surfactant.

General formula(1)

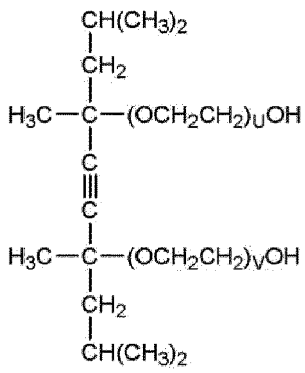

(In the general formula (1), U+V represents an integer of from 0 to 20)

[1-5] Other solvent:

The ink of the present invention may further contain another water-soluble organic solvent as required. Although the kind of the water-soluble organic solvent is not particularly limited, various water-soluble organic solvents such as alcohols, polyhydric alcohols, glycol ethers, carboxylic acid amides, heterocycles, ketones, alkanolamines, and ureas may be used.

[1-6] Other additive:

The ink of the present invention may contain a water-soluble organic solvent or another additive as required. Examples of such additive may include a pH adjustor, a rust inhibitor, an antiseptic, a mildewproofing agent, an antioxidant, a reduction inhibitor, and a salt.

[1-7] Surface tension:

The surface tension of the ink of the present invention is preferably adjusted to 25 mN/m or more and 45 mN/m or less. Setting the surface tension within this range can maintain an optimum dot diameter at the time of printing.
The surface tension of the ink of the present invention means a value measured by a plate method using a platinum plate with an automatic surface tensiometer (for example, "CBVP-Z type" manufactured by Kyowa Interface Science Co., LTD.) under the conditions of a temperature of 25°C and a humidity of 50%. The surface tension of the ink can be adjusted by, for example, the addition amount of the surfactant, and the kind and content of the water-soluble organic solvent.

[1-8] Viscosity of ink:

The viscosity η of the ink of the present invention is preferably 1.5 mPa·s or more and 5.0 mPa·s or less. The viscosity is more preferably 1.6 mPa • s or more and 3.5 mPa•s or less, still more preferably 1.7 mPa•s or more and 3.0 mPa·s or less. Setting the viscosity to 1.5 mPa•s or more can result in the formation of a good ink droplet. On the other hand, setting the viscosity to 5.0 mPa·s or less improves the flowability of the ink, and hence improves the suppliability of the ink to a nozzle, and thus improves the ejection stability of the ink.

The viscosity of the ink means a value measured with an E-type viscometer (for example, "RE-80L viscometer" manufactured by Toki Sangyo Co., Ltd.) under the condition of a temperature of 25°C according to JIS Z 8803. The viscosity of the ink can be adjusted by, for example, the kind and amount of the surfactant and the kind and amount of the water-soluble organic solvent.

[1-9] pH:

The pH of the ink of the present invention is preferably 7.5 or more and 10.0 or less, more preferably 8.5 or more and 9.5 or less. A pH of less than 7.5 is not preferred because the dispersion stability of the pigment particles deteriorates and hence the agglomeration of the pigment particles is liable to occur. On the other hand, a pH in excess of 10.0 is not preferred because of the following reason. Such pH of the ink is so high that some member of an apparatus to be used is subjected to a chemical attack through contact with the ink, which leads to the elution of an organic matter or inorganic matter in the ink. As a result, ejection failure occurs. The pH of the ink means a value measured under the condition of a temperature of 25°C with a pH meter (such as a D-51 manufactured by HORIBA, Ltd.).

[2] Recording head:

Now, a recording head according to an embodiment of the present invention, which is particularly suitable for use with the ink having the above-mentioned constitution according to the present invention, is described with reference to the attached drawings. The ink according to the present invention can obtain more outstanding effects of the present invention in combination with the recording head. However, the recording head according to the present invention is not limited to a structure described below.

[2-1] Structure of nozzle portion:

First, a structure of a nozzle portion is described with reference to FIG. 1A to FIG. 1C. FIG. 1A is a top view schematically illustrating an internal structure of nozzles of the recording head. FIG. 1B is a side view schematically illustrating the internal structure of the nozzle illustrated in FIG. 1A. FIG. 1C is a front view schematically illustrating an ink ejection orifice of the nozzle illustrated in FIG. 1A.

In the recording head of the thermal system, as illustrated in FIG. 1A, a nozzle array is formed of a plurality of nozzle flow paths 159 partitioned by nozzle walls 153, a plurality of ink ejection orifices 151 communicating with the nozzle flow paths 159 are formed, and a heater 152 for ink ejection is disposed in each of the nozzle flow paths 159. The head having such a structure can cause an ink droplet to fly from the ink ejection orifice 151 by heating ink filled into the nozzle flow path 159 with the heater 152 so as to generate a bubble in the ink.

In the illustrated embodiment, a nozzle filter 155 for trapping foreign matters floating in an ink flow path in the recording head is disposed between the nozzle flow paths 159 and a common liquid chamber 112. Further, a top board member 113 to which a nozzle top board 162 is bonded includes an ink supply opening (not shown) formed by anisotropic etching or the like so as to allow ink from the outside to be introduced from the common liquid chamber 112 to the nozzle flow paths 159.

Right and left side surfaces of each nozzle flow path 159 are partitioned by the nozzle walls 153. In addition, an upper surface side of the nozzle flow path 159 is partitioned by the nozzle top board 162, and a bottom surface side thereof is partitioned by a nozzle bottom board 164. That is, the nozzle flow path 159 is an inner space having a substantially quadrangular prism shape partitioned from a surrounding space with the nozzle walls 153, the nozzle top board 162, and the nozzle bottom board 164 being partition walls. The nozzle top board 162 is bonded to the top board member 113 formed of Si or the like, and the nozzle bottom board 164 is bonded to a heater substrate 111.

The ink ejection orifice 151 is an opening portion for ejecting ink, which is formed at one end of the nozzle flow path 159, and communicates with the common liquid chamber 112 via the nozzle flow path 159. The ink ejection orifice 151 is formed on a face surface. In the illustrated example, the face surface is formed integrally with the nozzle walls 153, but may be formed by providing a face plate separately. The opening area of the ink ejection orifice 151 is set to 100 $\mu m^2$ or more and 350 $\mu m^2$ or less. When the opening area is set to 100 $\mu m^2$ or more, the generation of a non-ejection nozzle can be prevented. On the other hand, when the opening area is set to 350 $\mu m^2$ or less, minute liquid

droplets in which the amount of one ink droplet is 10 pL or less can be formed, and a resolution of 600 dpi or more can be achieved. Note that, the opening area is represented by a product of an ejection orifice width 171 and an ejection orifice height 172.

The recording head is a line type head, in which a plurality of nozzle flow paths form a nozzle array. The number of nozzle flow paths that form the nozzle array is not particularly limited. However, in order to exert the effects of the present invention, it is necessary that the total number of nozzles in the nozzle array be 1,200 or more. It is preferred that the total number of nozzles in the nozzle array be 1,200 or more and 9,600 or less, and it is further preferred that the total number of nozzles in the nozzle array be 1,200 or more and 4,800 or less. Further, it is necessary that the length of the nozzle array be 2 inches or more, and it is preferred that the length of the nozzle array be 2 inches or more and 4 inches or less.

The heater 152 is a heating unit for generating bubbles in ink filled into the nozzle flow path 159 by heating. The heater 152 is disposed on the heater substrate 111. As the heater 152, a resistor (for example, a resistor made of tantalum nitride or the like) can be used. Electrodes (not shown) made of aluminum or the like for electric conduction are connected to the heater 152, and a switching transistor (not shown) for controlling the electric conduction to the heater 152 is connected to one of the electrodes. The drive of the switching transistor is controlled by an integrated circuit (IC) formed of a circuit such as a gate element for control, and the switching transistor is driven with a predetermined pattern by a signal from outside of the recording head.

The recording head can be driven with a drive frequency of 1 kHz or more and 10 kHz or less. By driving the recording head with a drive frequency of 1 kHz or more, even when the amount of ink per droplet is extremely small, the amount of ink provided per unit time can be increased to increase the amount of image data and the number of recording dots. In other words, a high quality image can be printed at high speed. By driving the recording head with a drive frequency of 10 kHz or less, such an inconvenience is inhibited that the stability of ejection is reduced due to an insufficient supply amount of ink to the nozzle with respect to the amount of ejected ink in high speed printing as described above. In order to obtain the above-mentioned effects with more reliability, it is preferred that the recording head be driven with a drive frequency of 3 kHz or more and 8 kHz or less. Further, it is also preferred that the recording head according to the present invention be driven with a drive frequency of 6 kHz or more and 10 kHz or less, because the stability of ejection is less liable to be reduced and ejection failure of the nozzle is less liable to occur even with a high drive frequency.

It is preferred that the total length of the nozzle be set to 200 $\mu$m or more and 300 $\mu$m or less. The "total length of the nozzle" in this case means the length of the nozzle flow path 159 and specifically means a length from an end on the ink ejection orifice 151 side to an end on the common liquid chamber 112 side of the nozzle wall 153 forming the nozzle flow path 159.

The nozzle flow path 159 is divided into a nozzle front portion 181, which is a portion from a heater center 157 to the end on the ink ejection orifice 151 side, and a nozzle back portion 182, which is a portion from the heater center 157 to the end on the common liquid chamber 112 side. From the viewpoint of ejection speed, it is preferred that the flow resistance of the nozzle front portion 181 (front resistance) and the flow resistance of the nozzle back portion 182 (back resistance) satisfy such a relationship that the value (front resistance)/(back resistance) is 0.3 or more and 0.8 or less. Note that, the flow resistance can be determined by calculation according to the Hagen-Poiseuille law from values such as a flow path sectional area, flow path length, and viscosity of ink to be ejected. That is, when ink to be used (and its viscosity) is determined, the value (front resistance)/(back resistance) can be adjusted by the flow path sectional area of a nozzle, flow path length, and the like.

[2-2] Nozzle member:

The nozzle wall 153, the nozzle top board 162, and the nozzle bottom board 164 partitioning the nozzle flow path 159 can each be formed of, for example, a photosensitive resin. As the photosensitive resin, a negative photoresist or the like may be used. Specific examples of a commercial product may include: "SU-8 Series" and "KMPR-1000" (manufactured by Kayaku Microchem); and "TMMR," "TMMR S2000," and "TMMF S2000" (manufactured by TOKYO OHKA KOGYO CO., LTD.). Of those, an epoxy-based photosensitive resin excellent in solvent resistance and strength as a nozzle wall is preferably used. A particularly preferred commercial product is specifically, for example, "TMMR S2000" manufactured by TOKYO OHKA KOGYO CO., LTD.

[2-3] Hydrophilic region, water-repellent region:

The recording head of the present invention is preferably such that a hydrophilic region or a water-repellent region is formed on the peripheral edge of an ink ejection orifice. Which one of the hydrophilic region and the water-repellent region is formed has only to be determined in consideration of the kind of the coloring material of the ink to be used and the surface tension of the ink.

For example, when an ink whose coloring material is a pigment or whose surface tension is 34 mN/m or less is used, a recording head (hydrophilic head) in which a hydrophilic region is formed on the peripheral edge of an ink ejection orifice is preferred. In addition, a hydrophilic region having a contact angle with the ink to be used of 60° or less is preferably formed on the peripheral edge of the ink ejection orifice, and a hydrophilic region having a contact angle of 0° (that is, forming no contact angle) is more preferably formed. Note that, the contact angle of a hydrophilic region or a water-repellent region can be measured in conformity with JIS R 3257 with a contact angle meter (such as a product available under the trade name "SImage-mini" from Excimer Inc.) by an ATAN1/2θ method. Contact angles are measured by the method in Examples to be described later as well.

The hydrophilic region can be formed by a method involving forming a member (face member) in which an ink ejection orifice is formed with a hydrophilic material, a method involving subjecting the surface (face surface) of the face member to hydrophilic treatment, a method involving providing a hydrophilic film to the face surface, or the like.

As the face member, a resin such as an epoxy resin, in particular, an epoxy-based photosensitive resin can be used.

As the method involving subjecting a face surface to hydrophilic treatment, there may be mentioned a method involving roughening a face surface. Examples of the surface roughening method may include laser irradiation, $UV/O_3$ treatment, plasma treatment, heat treatment, oxidation treatment, and embossing treatment. Lasers that may be used in the laser irradiation include an excimer laser, a YAG laser, a $CO_2$ laser, and the like. Further, a peripheral edge portion of an ink ejection orifice may also be treated by a method involving soaking the peripheral edge portion in a liquid having high hydrophilicity for a long period of time. As the "liquid having high hydrophilicity", there may be mentioned pigment ink and the like. For example, it is appropriate that a face member be soaked in pigment ink to be used for 10 minutes or more.

As the method involving providing a hydrophilic film to a face surface, there may be mentioned a method involving forming a metal film or a hydrophilic resin film on a face surface. Needless to say, the hydrophilic film has hydrophilicity, and the hydrophilic film is preferably formed of a material having satisfactory adhesiveness with respect to a face member. As such material, there may be mentioned a composition containing a water-soluble resin and a water-insoluble low molecular weight compound. For example, the hydrophilic film can be formed by dissolving a water-soluble resin (hydroxypropyl cellulose, etc.) and a water-insoluble low molecular weight compound (bisphenol A, etc.) in an appropriate solvent (dimethylformamide, etc.), applying the obtained solution to a face surface, drying the solution, and treating the dried solution with alcohol or the like as needed.

It is appropriate that the method of forming a hydrophilic region be selected from among the above-mentioned methods as appropriate depending on the material forming a face member. Further, the hydrophilic region may be formed by a combination of two or more kinds of the above-mentioned methods. Of the above-mentioned methods, preferred is a method involving forming a nozzle peripheral portion with an epoxy-based photosensitive resin, treating the nozzle peripheral portion with $UV/O_3$, and subjecting the nozzle peripheral portion to hydrophilic treatment by soaking the nozzle peripheral portion in pigment ink.

In addition, for example, when an ink whose coloring material is a dye and whose surface tension is more than 34 mN/m is used, a recording head (water-repellent head) in which a water-repellent region is formed on the peripheral edge of an ink ejection orifice is preferred. In addition, a water-repellent region having a contact angle with the ink to be used of 90° or more is more preferably formed on the peripheral edge of the ink ejection orifice, and a water-repellent region having a contact angle with the ink to be used of 100° or more is particularly preferably formed.

The water-repellent region can be formed by, for example, a method involving applying a water-repellent film to the surface (face surface) of a member (face member) having formed therein an ink ejection orifice.

The method involving applying the water-repellent film to the face surface can be, for example, a method involving forming an ultra-water-repellent resin film on the face surface. The ultra-water-repellent resin film can be formed by a conventionally known method. Examples thereof may include a method involving applying a fluorine resin, a silicone resin, or the like to the face surface to form a resin film; and a method involving subjecting a fluorine-based monomer to plasma polymerization on the face surface to form a fluorine resin film. A method involving forming a water/oil-repellent resin film on the face surface may also be adopted. An example of the method may be a method involving forming a film formed of a fluorine resin obtained by polymerizing a fluorocarbon compound. In particular, the following method is preferred: a solution is prepared by dissolving a fluorine-containing silicone coupling agent (such as "KP-801M" manufactured by Shin-Etsu Chemical Co., Ltd.) in a fluorine-based solvent (such as "CXT-809A" manufactured by ASAHI GLASS CO., LTD., or "<Novec> HFE-7100," "<Novec> HFE-7200," or "<Novec> HFE-71IPA" manufactured by Sumitomo 3M Limited), and the solution is deposited from the vapor onto the face surface under heat to form a water-repellent film.

[2-4] Entire structure of recording head:

Next, an entire structure of the recording head is described with reference to FIG. 2A to FIG. 2C. The recording head having a structure as illustrated in FIG. 2A to FIG. 2C is disclosed in Japanese Patent Application Laid-Open No.

2013-014111. Therefore, the disclosure of Japanese Patent Application Laid-Open No. 2013-014111 is incorporated herein by reference and only a brief description thereof is made. FIG. 2A is a front view schematically illustrating the recording head according to the present invention. FIG. 2B is a sectional view taken along the line IIB-IIB of FIG. 2A. FIG. 2C is a sectional view taken along the line IIC-IIC of FIG. 2A. For the sake of convenience of description, a liquid supply case cover is omitted in the front view.

As illustrated in FIG. 2A to FIG. 2C, it is preferred that the recording head according to the present invention to be a line type head include the common liquid chamber 112 communicating with the plurality of nozzle flow paths that form the nozzle array, a liquid supply port 127 communicating with the common liquid chamber 112, a main liquid supply chamber 126 communicating with the liquid supply port 127, a liquid supply path 137 communicating with the main liquid supply chamber 126, a liquid supply chamber (first liquid supply chamber 134 and second liquid supply chamber 135) communicating with the liquid supply path 137, a supply filter 118 provided so as to partition the liquid supply chamber into the first liquid supply chamber 134 and the second liquid supply chamber 135 from an upstream side along a flow during liquid supply, a gas-liquid separation portion 120 provided in part of the main liquid supply chamber 126, and an air chamber 141 communicating with the gas-liquid separation portion 120.

Further, it is preferred that the nozzle flow paths, the common liquid chamber 112, the liquid supply port 127, the main liquid supply chamber 126, the liquid supply path 137, the liquid supply chamber (the first liquid supply chamber 134 and the second liquid supply chamber 135), the supply filter 118, the gas-liquid separation portion 120, and the air chamber 141 be disposed on a plane parallel to a plane including an arrangement direction of the nozzle flow paths and an ejection direction of the liquid, and the main liquid supply chamber 126, the liquid supply path 137, the supply filter 118, the gas-liquid separation portion 120, and the air chamber 141 be disposed without being laminated respectively.

The recording head having the structure as illustrated in FIG. 2A to FIG. 2C is referred to as a recording head of a gas-liquid separation type. The recording head of the gas-liquid separation type fills ink in a nozzle thereof using self weight of the ink, and thus, it is extremely difficult to secure the stability of ejection compared with a recording head of a conventional structure. Therefore, it can be said that the recording head of the gas-liquid separation type is an embodiment that can most enjoy the effects of the present invention.

A base plate 110 made of ceramic supports the heater substrate 111 made of silicon. On the heater substrate 111, a plurality of electrothermal converters (heaters or energy generation portions) serving as ejection energy generation elements for a liquid and a plurality of flow path walls for forming nozzles corresponding to the electrothermal converters are formed. Further, a liquid chamber frame surrounding the common liquid chamber 112 communicating with each nozzle is also formed on the heater substrate 111. The top board member 113 forming the common liquid chamber 112 is joined onto a side wall of the nozzle and the liquid chamber frame thus formed. Thus, the heater substrate 111 and the top board member 113 are laminated so as to adhere to the base plate 110 under the condition of being integrated with each other. Such lamination and adhesion are performed with an adhesive having a satisfactory heat conductivity such as silver paste. In a back portion of the heater substrate 111 on the base plate 110, a mounted printed circuit board (PCB) 114 is supported through use of a double-sided tape (not shown). Each ejection energy generation element on the heater substrate 111 and the PCB 114 are electrically connected to each other by wire bonding corresponding to each wiring.

A liquid supply member 115 is joined onto an upper surface of the top board member 113. The liquid supply member 115 is formed of a liquid supply case 116 and a liquid supply case cover 117. When the liquid supply case cover 117 closes the upper surface of the liquid supply case 116, a liquid chamber and a liquid supply path to be described later are formed. The liquid supply case 116 and the liquid supply case cover 117 are joined to each other through use of, for example, a thermosetting adhesive. Further, the liquid supply case 116 is provided with the supply filter 118 and a discharge filter 119. The supply filter 118 serves to remove foreign matters in a liquid supplied to the liquid supply member 115, and the discharge filter 119 serves to prevent foreign matters from entering from the outside of the recording head. Each filter is fixed to the liquid supply case 116 by heat fusion. Further, the gas-liquid separation portion 120 is formed in part of the liquid supply case 116, and a liquid surface detection sensor 121 is mounted from outside so as to protrude to the gas-liquid separation portion 120. Thus, the amount of a liquid in the liquid chamber is controlled as described above.

Now, the structure of the liquid chamber, the liquid supply path, and the like formed by fitting of the two components, liquid supply case 116 and liquid supply case cover 117, is described. In a joining surface of the liquid supply case 116 with respect to the top board member 113, the liquid supply port 127 being a rectangular opening portion is formed substantially in parallel to an arrangement direction of nozzles over the width of the nozzle array, and the main liquid supply chamber 126 in a reservoir chamber shape is formed in an extended position of the liquid supply port 127. That is, the main liquid supply chamber 126 is formed substantially in parallel to the nozzle array over the width of the nozzle array. Further, a top surface on an opposed side of the liquid supply port 127 forms an inclination with the gas-liquid separation portion 120 being an uppermost portion (main liquid supply chamber inclination 129) substantially over the entire region. The main liquid supply chamber inclination 129 has two opening portions, one of which is a liquid communication portion 131 and the other of which is the gas-liquid separation portion 120.

The gas-liquid separation portion 120 forms part of the main liquid supply chamber 126, and the depth of the part formed of the gas-liquid separation portion 120 is larger than that of the other part of the main liquid supply chamber 126. The purpose of this structure is to enhance the effect of breaking air bubbles mixed in a liquid in the liquid chamber as described later. In the embodiment illustrated in FIG. 2A, three electrodes of stainless steel are mounted in the gas-liquid separation portion 120, and are an upper limit detection electrode 123, a ground electrode 124, and a lower limit detection electrode 125 arranged in this order from the left side of FIG. 2A. The liquid surface in the main liquid supply chamber 126 is kept between the upper limit and the lower limit by the electric conduction between the ground electrode 124 and the upper limit detection electrode 123 and the electric conduction between the ground electrode 124 and the lower limit detection electrode 125. In the ink jet head of the embodiment illustrated in FIG. 2A, the reliability of detection can be enhanced by detecting the liquid surface of a liquid subjected to gas-liquid separation.

An air communication portion 130 is disposed at an extended position of the gas-liquid separation portion 120, and the air chamber 141 serving as an air flow path is formed at a further extended position. The discharge filter 119 described above is provided at a still further extended position and communicates with a discharge joint 133. The discharge filter 119 is formed of a material having water repellency. Even when a liquid flows into the air flow path (air chamber 141) and ink sticks to the discharge filter 119 to form a meniscus of the ink in the discharge filter 119, the capillary force of a filter portion can be reduced by the water repellency and the ink can be removed easily.

On the other hand, the liquid supply path 137 is provided via the liquid communication portion 131 provided at the main liquid supply chamber inclination 129. The liquid supply path 137 forms a tubular shape from the liquid communication portion 131 to the vicinity of the supply filter 118 and is formed on a plane that is almost identical and parallel to that of the main liquid supply chamber 126. The supply filter 118 is also disposed on a plane that is substantially identical and parallel to that of the main liquid supply chamber 126. The supply filter 118 is provided so as to partition the liquid supply chamber into two chambers. The chamber on a side communicating with a supply joint 132, that is, the chamber on an upstream side along a flow of liquid supply in the recording head is defined as the first liquid supply chamber 134, and the chamber on a downstream side is defined as the second liquid supply chamber 135. The supply filter 118 is disposed on a plane that is substantially identical and parallel to that of the main liquid supply chamber 126, and hence the first liquid supply chamber 134 and the second liquid supply chamber 135 adjacent to both surfaces of the supply filter 118 are also disposed on a plane that is substantially parallel to that of the main liquid supply chamber 126 or an ink ejection orifice arrangement surface 139.

The second liquid supply chamber 135 has an opening (hereinafter referred to as "second liquid supply chamber opening 136") above the supply filter 118 and communicates with the liquid supply path 137 through the second liquid supply chamber opening 136. Further, a top surface of the second liquid supply chamber 135 is provided with an inclination (hereinafter referred to as "second liquid supply chamber inclination 138") with the second liquid supply chamber opening 136 being an uppermost portion.

As described above, the main liquid supply chamber 126, the gas-liquid separation portion 120, the liquid supply path 137, the supply filter 118, the first liquid supply chamber 134, and the second liquid supply chamber 135 are each provided on a plane that is substantially parallel to the ink ejection orifice arrangement surface 139. On the other hand, as illustrated in the cross-section taken along line IIB-IIB, it is important that the main liquid supply chamber 126, the liquid supply path 137, the supply filter 118, and the gas-liquid separation portion 120 be disposed so as not to overlap each other in a direction perpendicular to the plane.

It is preferred that the supply filter 118 be a mesh made of stainless steel having a filter pore diameter of 1 $\mu$m or more and 10 $\mu$m or less and a filter area of 10 $mm^2$ or more and 500 $mm^2$ or less. The supply filter 118 having a filter pore diameter of 1 $\mu$m or more and a filter area of 10 $mm^2$ or more can reduce a flow path resistance (pressure loss) and can facilitate movement of an air bubble in the recording head. In order to obtain the above-mentioned effects with more reliability, it is further preferred that the filter area be 200 $mm^2$ or more. On the other hand, the supply filter 118 having a filter pore diameter of 10 $\mu$m or less can prevent dust from flowing into the nozzle without fail, and the supply filter 118 having a filter area of 500 $mm^2$ or less can downsize the recording head. In order to obtain the above-mentioned effects with more reliability, it is further preferred that the filter pore diameter be 3 $\mu$m or more and 8 $\mu$m or less.

[2-5] Filling of ink:

In the recording head according to the present invention, ink jet recording ink is filled in the inner space of the line type head, which communicates with the ink ejection orifices. It is preferred that the ink be filled at least at a portion of the inner space from ink ejection orifices to the common liquid chamber (that is, the nozzle flow paths and the common liquid chamber).

[3] Ink jet recording apparatus:

The ink jet recording apparatus according to the present invention includes an ink jet recording head and an

ink storage portion for storing ink to be supplied to the recording head, and has a feature in that the recording head is the recording head according to the present invention. The form of the ink storage portion is not particularly limited. For example, the ink storage portion may be an ink tank as illustrated in FIG. 3.

[3-1] Ink tank:

FIG. 3 is an enlarged sectional view illustrating the ink tank. An ink tank 230 is a container for storing liquid, and a liquid chamber (ink chamber 231) for storing ink is formed therein. The ink chamber 231 has a closed space formed therein, which can communicate with the outside only via a joint portion 232. The ink tank 230 is formed so as to be removable from the recording head. Further, the ink tank 230 is provided above the recording head. The ink chamber 231 is formed of a flexible member, and has built therein a spring 233-1 for generating negative pressure and a pressure plate 233-2 coupled to the spring 233-1. The spring 233-1 urges the ink chamber 231 via the pressure plate 233-2 from the inside to the outside to enlarge the inner space of the ink chamber 231. In other words, the spring 233-1 generates predetermined negative pressure in the ink chamber 231, and the spring 233-1, the pressure plate 233-2, and the ink chamber 231 are integrated with one another to form a negative pressure generation portion 233. The joint portion 232 is provided with a filter 234 made of a nonwoven fabric.

FIG. 4 is an enlarged sectional view of the recording head. A recording head 220 includes an energy generation element (not shown) such as an electrothermal conversion element (heater for ink ejection). The energy generation element causes ink I in an ink chamber 221 (liquid in the liquid chamber) to be ejected from an ejection orifice 220A. In the ink chamber 221, air (gas) exists together with the ink I. Therefore, an ink storage portion (liquid storage portion) having the ink I stored therein and an air storage portion (gas storage portion) having air (gas) stored therein are formed in the ink chamber 221.

An ink supply portion 222 for allowing the ink chamber 221 to communicate with the ink chamber 231 of the ink tank is provided above the ink chamber 221. The average width of the ink supply portion 222 is about 10 mm. Further, a filter member 223 is provided in an opening portion of the ink supply portion 222. The illustrated filter member 223 is a mesh formed of SUS. Metal fibers are woven into the mesh. A fine mesh of the filter member 223 suppresses entry of dust into the recording head from the outside.

A lower surface of the filter member 223 is in press contact with an ink retaining member 224 capable of retaining ink therein. FIG. 5A is an enlarged perspective view of the ink retaining member illustrated in FIG. 4. FIG. 5B is a sectional view illustrating the ink retaining member taken along the line VB-VB of FIG. 5A. As illustrated in FIG. 5A and FIG. 5B, a plurality of flow paths 224A that are circular in cross-section are formed in the ink retaining member 224. Each of the flow paths 224A has a diameter of about 1.0 mm.

Further, as illustrated in FIG. 4, an opening portion 225 is provided in an upper portion of the ink chamber 221. A filter 226 is provided in the opening portion 225. The opening portion 225 is configured to be coupled to a transportation portion (not shown) that is an outside flow path. The transportation portion is a flow path through which liquid and/or gas can be transported. The opening portion 225 is configured to cause the ink I and/or gas in the ink chamber 221 to flow to the outside, or, to cause liquid (such as ink) and/or gas outside the recording head 220 to flow into the ink chamber 221. In other words, the opening portion 225 is configured not only to cause liquid to solely flow out or flow in but also to cause gas to flow out or flow in together with the liquid.

By coupling the joint portion 232 of the ink tank 230 illustrated in FIG. 3 to the ink supply portion 222 of the recording head 220 illustrated in FIG. 4, the ink tank 230 illustrated in FIG. 3 is directly connected to the recording head 220 illustrated in FIG. 4. At this time, the filter 234 of the ink tank 230 illustrated in FIG. 3 and the filter member 223 of the recording head 220 illustrated in FIG. 4 are in press contact with each other in a vertical direction. The coupled portion between the ink tank and the recording head formed in this way can maintain airtightness thereof by being surrounded by an elastic cap member formed of rubber. The above-mentioned structure in which the recording head and the ink tank are directly connected with each other is preferred in that an ink supply path (liquid supply path) therebetween can be extremely short.

[3-2] Entire structure of recording apparatus:

Structures and the like of other portions of the ink jet recording apparatus are not particularly limited. For example, a recording apparatus 300 illustrated in FIG. 6 can be suitably used.

FIG. 6 is a schematic structural view schematically illustrating an entire structure of the ink jet recording apparatus. An external host apparatus (computer apparatus 308) is connected to the recording apparatus 300. The recording apparatus 300 is configured to eject, based on recording data that is input from the computer apparatus 308, ink from recording heads 305 to record an image.

In the recording apparatus 300, a label paper sheet to which a plurality of labels are temporarily affixed is used as a recording medium 301. The recording medium 301 is set in a state of being rolled into a roll shape. However, in

the ink jet recording apparatus according to the present invention, as the recording medium, not only paper but also any material such as cloth, plastic film, metal plate, glass, ceramic, wood, or leather may be used insofar as the material can receive ink.

The recording apparatus 300 includes, as a conveyance unit for conveying the recording medium 301, a conveyance motor 303, a conveyance roller 302, a rotary encoder 310, and a roll motor 311. By driving the conveyance roller 302 by the conveyance motor 303, the recording medium 301 can be conveyed at a uniform speed in a direction indicated by the arrow A. The rotary encoder 310 can detect the speed and the amount of conveyance of the recording medium 301. The recording medium 301 can be rolled again by the roll motor 311 in a direction opposite to the direction indicated by the arrow A. A sheet detection sensor 304 is a sensor for detecting a specific portion of the recording medium 301. In the illustrated example, leading edges of the respective labels that are temporarily affixed to the label paper are detected. The timing of recording an image can be determined based on the above-mentioned detection.

The recording apparatus 300 includes, in an upper portion thereof, four recording heads 305 and ink tanks 306 corresponding thereto, respectively. The four recording heads are recording heads for ejecting ink of black, cyan, magenta, and yellow, respectively.

The recording head 305 is a so-called line type head formed so as to have a width larger than a maximum recording width of the recording medium 301, and includes a plurality of nozzles capable of ejecting ink. The ink ejection orifices of the nozzles open on a lower surface side of the recording head 305. The recording head 305 is disposed so that the longitudinal direction thereof is along a direction intersecting the direction of conveyance of the recording medium 301 (direction orthogonal to the direction indicated by the arrow A in FIG. 6), and the plurality of nozzles are arranged along the longitudinal direction to form the nozzle array.

In the recording apparatus 300, the conveyance roller 302 is driven by the conveyance motor 303, and the conveyance roller 302 conveys the recording medium 301 at a uniform speed in the direction indicated by the arrow A. When the specific portion of the recording medium 301 is detected by the sheet detection sensor 304, based on the detection position, ink is ejected in sequence from the ink ejection orifices of the four recording heads 305. At this time, ink is supplied from the ink tanks 306 to the recording heads 305. In this way, when the recording medium 301 passes under the recording heads 305, ink is ejected from the plurality of nozzles of the recording heads 305 to record an image on the recording medium 301. Note that the recording heads 305 are line type heads and thus eject ink in a state of being fixed at a predetermined position. In other words, the recording heads 305 do not eject ink while being horizontally reciprocated like serial heads.

The recording apparatus 300 includes, as a recovery mechanism for carrying out recovery operation of the recording head 305, a capping mechanism 307, a blade 309, and the like.

The recovery operation is operation for causing the recording head 305 to recover so as to exert ejection performance that is as adequate as that in an initial state. The recovery operation may be, for example, suction recovery, pressurization recovery, preparatory ejection, or wiping recovery. The suction recovery is operation to remove, by suction with the capping mechanism 307, thickened ink in the nozzle of the recording head 305. The pressurization recovery is operation to discharge, by pressurization, thickened ink in the nozzle of the recording head 305 to the capping mechanism 307. The preparatory ejection is operation to discharge thickened ink in the nozzle to the capping mechanism 307 by ejection to stabilize an ink meniscus. The wiping recovery is operation to wipe a face surface of the recording head with the blade 309 to remove dust and ink adhering to the face surface. Those kinds of recovery operation may be used in combination.

The capping mechanism 307 is a mechanism for capping ink ejection orifices of the recording heads 305, and is disposed below the recording heads 305. The recording heads 305 and the capping mechanism 307 are configured to relatively move in right and left directions in FIG. 6. On the other hand, the blade 309 is a member for wiping the face surfaces of the recording heads 305, and is disposed below the recording heads 305.

When the suction recovery is performed, under a state in which the recording head 305 is capped by the capping mechanism 307, inside of a buffer tank (not shown) of the capping mechanism 307 is depressurized by a tube pump (not shown). In this way, thickened ink in the nozzle of the recording head 305 is removed by suction with the capping mechanism 307, to thereby refresh the inside of the nozzle.

When the pressurization recovery is performed, under a state in which the recording head 305 is capped by the capping mechanism 307, the inside of the nozzle of the recording head 305 is pressurized. In this way, thickened ink in the nozzle is discharged into a cap of the capping mechanism 307 by pressurization, to thereby refresh the inside of the nozzle.

When the wiping recovery is performed, the blade 309 is driven by a blade motor (not shown), and the face surface of the nozzle of the recording head 305 is wiped. Further, pressurization recovery (preparatory ejection) is performed. In this way, the face surface of the nozzle is cleaned and a meniscus in the ink ejection orifice is stabilized.

Note that ink accumulated in the capping mechanism 307 by those kinds of recovery operation is sucked by a tube pump (not shown) when the accumulation reaches a predetermined amount, and thus discarded in a waste ink tank (not shown).

[3-3] Control system:

Next, control of the ink jet recording apparatus is described. FIG. 7 is a block diagram illustrating a control system of the recording apparatus illustrated in FIG. 6. The recording apparatus includes, in addition to a recording mechanism including the recording head, control system components such as a central processing unit (CPU), a USB interface portion, and a ROM. A CPU 401 runs a program stored in a program ROM 402 to control portions of the recording apparatus. The program ROM 402 stores a program and data for controlling the recording apparatus. Processing by the recording apparatus is realized by the CPU 401 that reads and runs a program in the program ROM 402.
The recording data that is output from the computer apparatus 308 is input to an interface controller 403 of the recording apparatus. Commands for instructing the number, the kind, the size, and the like of the recording medium (labels) are also input to the interface controller 403 and are analyzed. In addition to analysis of those commands, the CPU 401 executes arithmetic processing for controlling the entire recording apparatus, such as input of recording data, recording operation, and handling of a recording medium. The arithmetic processing is executed based on processing programs stored in the program ROM 402. The programs include a program corresponding to a procedure in a flow chart of FIG. 8 to be described below. Further, as a work memory for the CPU 401, a work RAM 404 is used. An EEPROM 405 is a rewritable nonvolatile memory. In the EEPROM 405, parameters unique to the recording apparatus are stored, such as time at which the previous recovery operation is carried out, and correction values for finely adjusting distances among the plurality of recording heads and a recording position in the direction of conveyance (registration in a longitudinal direction).
More specifically, the CPU 401 analyzes the input commands, and after that, expands image data of respective color components of the recording data into a bitmap in an image memory 406. Based on this data, an image is rendered. Further, the CPU 401 controls the conveyance motor 303, the roll motor 311, a capping motor 409, a head motor 410, and a pump motor 418 via an input/output circuit 407 and a motor drive portion 408. The capping motor 409 is a motor for driving the capping mechanism 307. The head motor 410 is a motor for moving recording heads 305K, 305Y, 305M, and 305C. The pump motor 418 is a motor for driving the tube pump. The recording heads 305K, 305Y, 305M, and 305C are moved among a capping position, a recording position, and a recovery position. The capping position is a position at which capping is carried out by the capping mechanism 307. The recording position is a position at which an image is recorded. The recovery position is a position at which the recovery operation is carried out.
When an image is recorded by the recording apparatus, as illustrated in FIG. 6, the conveyance roller 302 is driven by the conveyance motor 303 to convey the recording medium 301 (in the illustrated example, label paper sheets) at a uniform speed. Then, the rotary encoder 310 detects the speed and the amount of conveyance of the recording medium 301. In the control system illustrated in FIG. 7, in order to determine the timing of recording an image relative to the recording medium that is conveyed at the uniform speed, the sheet detection sensor 304 detects a leading edge of a label. A detection signal from the sheet detection sensor 304 is input to the CPU 401 via an input/output circuit 411. When the recording medium is conveyed by the conveyance motor, in synchronization with a signal from the rotary encoder (not shown), the CPU 401 reads image data for the respective colors in sequence from the image memory 406. The image data is transferred via a recording head control circuit 412 to any one of the recording heads 305K, 305Y, 305M, and 305C corresponding thereto. Thus, the recording heads 305K, 305Y, 305M, and 305C eject ink based on the image data.
Operation of a pump motor 413 for driving a pump is controlled via the input/output circuit 407 and the motor drive portion 408. An operation panel 414 is connected to the CPU 401 via an input/output circuit 415. Environmental temperature and environmental humidity of the recording apparatus are detected by a hygrothermosensor 416, and are input to the CPU 401 via an A/D converter 417.

[3-4] Recovery sequence:

When the environmental temperature becomes 40°C or more and water evaporates, ink is more liable to stick to the recording head. Therefore, it is preferred to add a recovery sequence for recovering the face surface of the recording head when the head is in an open state in which the recording head is uncapped, and, at the same time, water evaporates.
FIG. 8 is a flow chart illustrating steps of the recovery sequence of the recording head. The recovery sequence illustrated in FIG. 8 is triggered when the recording head is uncapped, i.e., under a cap opening condition (Condition 501). When the recovery sequence is triggered, the hygrothermosensor obtains (detects) the environmental temperature and the environmental humidity of the recording apparatus (Step 502). As a result of the detection, when the environmental temperature is 40°C or more and the environmental humidity is 70% or less (Condition 503), and at the same time, the cumulative amount of time from the previous suction recovery is one hour or more (Condition 504), pressurization recovery (preparatory ejection) for refreshing ink in the nozzle and wiping recovery for wiping and cleaning the face surface of the nozzle are carried out (Step 505). Note that, Condition 504 is reset when the suction recovery is carried out.

Examples

Now, the present invention is more specifically described in detail by way of Examples and Comparative Examples. However, the present invention is not limited to only the constitutions of Examples below. Note that, "part(s)" and "%" in the following description refer to "part(s) by mass" and "mass%", respectively, unless otherwise stated.

Synthesis Example: Synthesis of (meth)acrylate-based random copolymer

1,000 Parts of methyl ethyl ketone were loaded into a reaction vessel mounted with a stirring device, a dropping device, and a temperature sensor, and a reflux device having a nitrogen-introducing device in its upper portion, and the inside of the reaction vessel was replaced with nitrogen while the contents were stirred. While a nitrogen atmosphere in the reaction vessel was maintained, the temperature in the vessel was increased to 80°C. After that, 63 parts of 2-hydroxyethyl methacrylate, 141 parts of methacrylic acid, 417 parts of styrene, 188 parts of benzyl methacrylate, 25 parts of glycidyl methacrylate, 33 parts of a polymerization degree regulator (manufactured by NOF CORPORATION, trade name: "BLEMMER TGL"), and 67 parts of t-butyl peroxy-2-ethylhexanoate were mixed, and the resultant mixed liquid was dropped over 4 hours. After the completion of the dropping, the reaction was further continued at that temperature for 10 hours to provide a solution (resin content: 45.4%) of a (meth)acrylate-based random copolymer (A-1) having an acid value of 110 mgKOH/g, a glass transition point (Tg) of 89°C, and a weight-average molecular weight of 8,000.

Preparation of black pigment dispersion to be used in coloring material of ink

The solution (resin content: 45.4%) of the (meth)acrylate-based random copolymer (A-1) obtained in the polymer synthesis, a 25% aqueous solution of potassium hydroxide, water, and a carbon black pigment were loaded into a mixing tank having a cooling function, and were stirred and mixed to provide a mixed liquid. Here, their respective loading amounts are as follows: the amount of the carbon black pigment is 1,000 parts, the amount of the (meth)acrylate-based random copolymer is such that the ratio of its nonvolatile content to carbon black is 40%, the amount of the 25% aqueous solution of potassium hydroxide is such that 100% of the acid value of the (meth)acrylate-based random copolymer is neutralized, and the amount of the water is an amount required for setting the nonvolatile content of the mixed liquid to 27%. The resultant mixed liquid was caused to pass through a dispersing device filled with zirconia beads having a diameter of 0.3 mm and dispersed by a circulating system for 4 hours. Note that, the temperature of a dispersion liquid was maintained at 40°C or less.

The dispersion liquid was extracted from the mixing tank. After that, a flow path between the mixing tank and the dispersing device was washed with 10,000 parts of the water, and the washing liquid and the dispersion liquid were mixed to provide a diluted dispersion liquid. The resultant diluted dispersion liquid was put into a distilling device, and a concentrated dispersion liquid was obtained by distilling off the total amount of methyl ethyl ketone and part of water. While the concentrated dispersion liquid that had been left standing to cool to room temperature was stirred, 2% hydrochloric acid was dropped to adjust its pH to 4.5. After that, its solid content was filtered out with a Nutsche-type filtering device and washed with water. The resultant solid content (cake) was put into a container and water was added thereto. After that, the cake was redispersed with a dispersion stirring machine and the pH of the resultant was adjusted to 9.5 with a 25% aqueous solution of potassium hydroxide. After that, coarse particles were removed with a centrifugal separator at 6,000 G over 30 minutes, and then the nonvolatile content of the remainder was adjusted. Thus, a carbon black pigment dispersion (pigment content: 14%) was obtained.

Preparation of cyan pigment dispersion to be used in coloring material of ink

A cyan pigment dispersion was prepared by the same method as that of the black pigment dispersion except that Pigment Blue 15:3 was used as a coloring material.

Preparation of magenta pigment dispersion to be used in coloring material of ink

A magenta pigment dispersion was prepared by the same method as that of the black pigment dispersion except that Pigment Red 122 was used as a coloring material; and the ratio of the resin to the pigment was changed from 40% to 30%.

Preparation of yellow pigment dispersion to be used in coloring material of ink

A yellow pigment dispersion was prepared by the same method as that of the black pigment dispersion except

that Pigment Yellow 74 was used as a coloring material; and the ratio of the resin to the pigment was changed from 40% to 35%.

Preparation of Ink

Example 1

An ink 1 of Example 1 was prepared as described below. 21.4 Parts of the black pigment dispersion (pigment concentration: about 14%) prepared in advance was added as a coloring material to a container, and 7 parts of glycerin, 2 parts of triethylene glycol, 27.5 parts of a 40% aqueous solution of solid ethylene urea (ethylene urea solid content: 11 parts), and 3.1 parts of a 65% aqueous solution of solid bishydroxyethyl sulfone (bishydroxyethyl sulfone solid content: 2 parts) were added as water-soluble compounds thereto.
Further, 0.5 part of Acetylenol E100 (manufactured by Kawaken Fine Chemicals Co., Ltd.) and 1.0 part of BC-20 (manufactured by Nikko Chemicals Co., Ltd.) as nonionic surfactants were added to the mixture, and the amount of the entirety was set to 100 parts by adding pure water (ion-exchanged water) in an amount corresponding to the balance. Therefore, the total content of the water-soluble compounds in the ink is 22 mass%. The contents were stirred with a propeller stirring machine for 30 minutes or more and then filtered with a filter having a pore diameter of 3.0 μm to provide a black ink jet recording ink 1.

Examples 2 to 6 and Comparative Examples 1 to 5

A cyan ink 2, magenta ink 3, yellow ink 4, and black inks 5 and 6 of Examples 2 to 6 were prepared in substantially the same manner as in the black ink 1 except that the coloring material or the composition of the water-soluble compounds was changed. In addition, black inks 7 to 11 of Comparative Examples 1 to 5 were each prepared in the same manner as in the black ink 1 except that the component composition of the water-soluble compounds and the like was changed. Specifically, the inks 2 to 11 were obtained in the same manner as in Example 1 except that the respective components shown in Table 1 were used in amounts shown in Table 1.

Test concerning water-soluble compounds constituting respective inks

The water activity value and viscosity of a 40% aqueous solution of the mixture of the water-soluble compounds constituting each of the inks of Examples 1 to 6 and Comparative Examples 1 to 5 were measured, and the results are shown in Table 1. The 40% aqueous solution of the mixture of the water-soluble compounds used as a sample for measurement was prepared by mixing only the water-soluble compounds at the same ratio as that used in each ink of Table 1; and setting the entire amount to 100 parts by adding pure water (ion-exchanged water) in an amount corresponding to the balance so that a 40% aqueous solution was obtained. The water activity value of the resultant sample was measured with an AquaLab CX-3TE (manufactured by DECAGON) based on a chilled mirror dew point-measuring method at 25°C. In addition, the viscosity of the resultant sample was measured under the condition of a temperature of 25°C with an E-type viscometer RE-80L (manufactured by Toki Sangyo Co., Ltd.).

Table 1-1: Compositions and evaluations of inks of Examples (part(s) by mass)

| | Example 1 | Example 2 | Example 3 | Example 4 | Example 5 | Example 6 |
|---|---|---|---|---|---|---|
| Black pigment dispersion | 3.0 | | | | 3.0 | 3.0 |
| Cyan pigment dispersion | | 2.5 | | | | |
| Magenta pigment dispersion | | | 3.0 | | | |
| Yellow pigment dispersion | | | | 3.0 | | |
| Glycerin | 7.0 | 7.0 | 7.0 | 7.0 | 5.0 | 7.0 |
| Triethylene glycol | 2.0 | 5.0 | 4.0 | 4.0 | 2.0 | 3.0 |
| Ethylene urea | 11.0 | 12.0 | 11.0 | 11.0 | 11.0 | 11.0 |
| Bishydroxyethyl sulfone | 2.0 | | | | 2.0 | 3.0 |
| Trimethylolpropane | | | | | | |
| 1,2-Hexanediol | | | | | | |

(continued)

| | Example 1 | Example 2 | Example 3 | Example 4 | Example 5 | Example 6 |
|---|---|---|---|---|---|---|
| Polyethylene glycol 300 | | | | | | |
| Diethylene glycol | | | | | | |
| Acetylenol E100 | 0.5 | 0.5 | 0.5 | 0.5 | 0.5 | 0.5 |
| BC-20 | 1.0 | 1.0 | 1.0 | 1.0 | 1.0 | 1.0 |
| Water | 73.5 | 72.0 | 73.5 | 73.5 | 75.5 | 71.5 |
| Total amount of water-soluble compounds (%) | 22.0 | 24.0 | 22.0 | 22.0 | 20.0 | 24.0 |
| Viscosity of 40% aqueous solution (mPa·s) | 2.70 | 2.79 | 2.78 | 2.78 | 2.78 | 2.74 |
| Water activity value of 40% aqueous solution | 0.901 | 0.899 | 0.899 | 0.899 | 0.899 | 0.903 |
| First-ejection property | OK | OK | OK | OK | OK | OK |

Table 1-2: Compositions and evaluations of inks of Comparative Examples (part(s) by mass)

| | Comp. Example 1 | Comp. Example 2 | Comp. Example 3 | Comp. Example 4 | Comp. Example 5 |
|---|---|---|---|---|---|
| Black pigment dispersion | 3.0 | 3.0 | 3.0 | 3.0 | 3.0 |
| Glycerin | 3.0 | 7.0 | 7.0 | | |
| Triethylene glycol | 2.0 | 2.0 | 11.0 | | |
| Ethylene urea | 11.0 | 2.0 | 2.0 | | |
| Bishydroxyethyl sulfone | 2.0 | 11.0 | 2.0 | | |
| Trimethylolpropane | | | | 15.0 | |
| 1,2-Hexanediol | | | | 5.0 | |
| Polyethylene glycol 300 | | | | | 20.0 |
| Diethylene glycol | | | | | 10.0 |
| Acetylenol E100 | 0.5 | 0.5 | 0.1 | 0.5 | 0.5 |
| BC-20 | 1.0 | 1.0 | 1.0 | 1.0 | 1.0 |
| Water | 77.5 | 73.5 | 73.9 | 75.5 | 65.5 |
| Total amount of water-soluble compounds (%) | 18.0 | 22.0 | 22.0 | 20.0 | 30.0 |
| Viscosity of 40% aqueous solution (mPa·s) | 2.61 | 2.85 | 3.38 | 4.83 | 4.39 |
| Water activity value of 40% aqueous solution | 0.897 | 0.913 | 0.902 | 0.947 | 0.917 |
| First-ejection property | NG | NG | NG | NG | NG |

Evaluation

An image was formed by using each of the inks of Examples and Comparative Examples obtained in the foregoing, and an ink jet recording apparatus, and each ink was evaluated by a method to be described later. Specifically, an ink jet recording apparatus of a thermal system ("LXP5500" manufactured by CANON FINETECH INC.) was used

as the ink jet recording apparatus. In addition, the apparatus including an ink jet head of the structure illustrated in FIG. 1A to FIG. 1C and FIG. 2A to FIG. 2C as an ink jet recording head was used. The specifications are as shown in Table 2.

Table 2: Specifications of recording head used in evaluation

| | |
|---|---|
| Length of nozzle array | 4 inch |
| Total number of nozzles per nozzle array | 4,800 |
| Ejection amount | 7.5 ng |
| L1: ejection orifice to heater center | 80 μm |
| L2: heater center to nozzle rear end | 135 μm |
| Total length of nozzle: L1+L2 | 215 μm |
| Width of ejection orifice | 12 μm |
| Height of ejection orifice | 16.7 μm |
| Opening area | 200 $\mu m^2$ |

First-ejection property test

An LXP5500 (manufactured by CANON FINETECH INC.) was used as an ink jet recording apparatus, and printing was performed under an environment having a temperature of 15°C and a humidity of 10% as described below. Each ink shown in Table 1 was stored in the ink tank of the ink jet recording apparatus, and ink droplets were ejected one by one from 4,800 ejection orifices arrayed in line on the recording head having the above-mentioned specifications at a density of 1,200 dpi to print a one-line printed pattern image. At that time, a Matte Label manufactured by CANON FINETECH INC. was used as a medium (recording medium). The printing was performed while the head exposure time from preparatory ejection to the printing was changed between 5 seconds and 10 seconds at the time of the printing. Printed lines were visually observed, the exposure time for which none of dot misalignment, an ejection failure, and a variation in line was present to perform normal ejection was measured, and the time was defined as a value of the first-ejection property. Then, first-ejection properties were evaluated by being classified into the following two ranks.
OK: 8 seconds or more
NG: Less than 8 seconds

It was confirmed that as shown in Table 1-1, each of the inks of Examples 1 to 6 had a total amount of the water-soluble compounds incorporated into the ink of 20% or more, a water activity value when the mixture of the water-soluble compounds was turned into a 40% aqueous solution in the range of from 0.88 or more to 0.91 or less, and a viscosity at that time of 3.3 mPa·s or less. The foregoing means that the evaporation of water is sufficiently suppressed at the initial stage of the evaporation, and the suppression of the evaporation of the water and a reduction in viscosity are achieved at the later stage of the evaporation at which the evaporation has progressed. Probably as a result of the foregoing, each ink showed a good first-ejection property as shown in Table 1-1.

In contrast to the inks of Examples, it was confirmed that as shown in Table 1-2, in the ink of Comparative Example 1, the amount of the water-soluble compounds in the ink was less than 20 mass%, the evaporation of water at the initial stage of the evaporation was not sufficiently suppressed, and the first-ejection property was not sufficient. In the ink of Comparative Example 2, the water activity value when the mixture of the water-soluble compounds was turned into a 40% aqueous solution exceeded 0.91, the evaporation of water at the later stage of the evaporation was not sufficiently suppressed, and a good first-ejection property could not be satisfied. In addition, in the ink of Comparative Example 3, the viscosity when the mixture of the water-soluble compounds was turned into a 40% aqueous solution exceeded 3.3 mPa·s, and a sufficiently satisfactory first-ejection property was not obtained owing to this result. Further, in the inks of Comparative Examples 4 and 5, the water activity value when the mixture of the water-soluble compounds was turned into a 40% aqueous solution exceeded 0.91 and the viscosity at that time exceeded 3.3 mPa·s, and hence a satisfactory first-ejection property was not obtained.

Further, also for an ink in which coloring materials used were dyes instead of pigments, ink jet recording was carried out using this ink that was prepared similarly to the cases described above, and similar evaluation was performed. As a result, when dyes were used as the coloring materials, the problem of the first-ejection property was not extremely serious compared with the cases of the inks in which pigments were used as the coloring materials, but, even in the case of the ink using dyes, effects obtained by preparing ink as defined by the present invention were clearly confirmed.

[Industrial Applicability]

The ink according to the present invention is suitable for ink jet recording of a thermal system, and is not only useful in the case of being applied to a recording head of a serial system but also particularly useful as an ink jet recording ink in a recording head of a line system, in which recovery operation cannot be carried out unless printing is stopped, and use of the ink is expected. In other words, by using the ink according to the present invention, an ink jet recording apparatus of a thermal system including a recording head of a line system can stably print a high quality image at high speed without dot misalignment, ejection failure, uneven lines, and interruption of printing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An ink jet recording ink including a coloring material; water; and three kinds of water-soluble compounds. The content of the water is 70 mass% or more with respect to the total amount of the ink. Each water-soluble compound has a molecular weight of 80 or more and is a liquid compound having a vapor pressure at 20°C of 5 Pa or less or a solid compound, and at least one kind of the water-soluble compounds is a solid compound. In case that the water-soluble compounds are mixed at a ratio at which the water-soluble compounds are incorporated into the ink to provide a mixture, a 40% aqueous solution of the mixture has a water activity value of 0.88-0.91 and a viscosity of 3.3 mPa·s or less. The total content of the water-soluble compounds in the ink is 20-25 mass% with respect to the total amount of the ink.

**Claims**

1. An ink jet recording ink, comprising:

   a coloring material;
   water; and
   three kinds of water-soluble compounds,
   wherein a content of the water is 70 mass% or more with respect to a total amount of the ink,
   wherein each of the three kinds of water-soluble compounds has a molecular weight of 80 or more and is a liquid compound having a vapor pressure at 20°C of 5 Pa or less or a solid compound, and at least one kind of the three kinds of water-soluble compounds is a solid compound,
   wherein in case that the three kinds of water-soluble compounds are mixed at a ratio at which the three kinds of water-soluble compounds are incorporated into the ink to provide a mixture, a 40% aqueous solution of the mixture has a water activity value of 0.88 or more and 0.91 or less and a viscosity of 3.3 mPa·s or less, and
   wherein a total content of the three kinds of water-soluble compounds in the ink is 20 mass% or more and 25 mass% or less with respect to the total amount of the ink.

2. An ink jet recording ink according to claim 1, wherein the water-soluble compound having a vapor pressure at 20°C of 5 Pa or less is selected from the group consisting of polyhydric alcohols, glycol ethers, carboxylic acid amides, heterocycles, alkanolamines, and sulfur-containing compounds.

3. An ink jet recording ink according to claim 2, wherein the water-soluble compounds include solid ethylene urea, and include at least one kind selected from the group consisting of glycerin, triethylene glycol, and bishydroxyethyl sulfone.

4. An ink jet recording method for producing a record by ejecting ink from a nozzle array using a thermal system,
   wherein each nozzle of the nozzle array has an opening area of from 100 $\mu m^2$ to 350 $\mu m^2$, and
   wherein the ink is the ink according to any one of claims 1 to 3.

5. An ink jet recording method comprising ejecting ink from a nozzle array using a thermal system top conduct recording,
   wherein a total number of nozzles per the nozzle array is 1,200 or more,
   wherein a length of the nozzle array is 2 inches or more, and
   wherein the ink is the ink according to any one of claims 1 to 3.

6. An ink jet recording head having ink stored therein, for ejecting the ink from a nozzle array using a thermal system,
   wherein each nozzle of the nozzle array has an opening area of from 100 $\mu m^2$ to 350 $\mu m^2$,
   wherein a total number of nozzles per the nozzle array is 1,200 or more,
   wherein a length of the nozzle array is 2 inches or more, and
   wherein the stored ink is the ink according to any one of claims 1 to 3.

**7.** An ink jet recording head having ink stored therein, for ejecting the ink from a nozzle array using a thermal system, the ink jet recording head comprising:

a common liquid chamber communicating with a plurality of nozzle flow paths serving as the nozzle array;
an opening portion communicating with the common liquid chamber;
a main liquid supply chamber communicating with the opening portion;
a liquid supply path communicating with the main liquid supply chamber;
a liquid supply chamber communicating with the liquid supply path;
a supply filter provided so as to partition the liquid supply chamber into a first liquid supply chamber and a second liquid supply chamber from an upstream side along a flow during supply of liquid;
a gas-liquid separation portion provided in part of the main liquid supply chamber; and
an air chamber communicating with the gas-liquid separation portion,
the plurality of nozzle flow paths, the common liquid chamber, the opening portion, the main liquid supply chamber, the liquid supply path, the liquid supply chamber, the supply filter, the gas-liquid separation portion, and the air chamber being disposed on a plane parallel to a plane including an arrangement direction of the plurality of nozzle flow paths and an ejection direction of the liquid,
the main liquid supply chamber, the liquid supply path, the supply filter, the gas-liquid separation portion, and the air chamber being disposed without being laminated respectively,
the stored ink is the ink according to any one of claims 1 to 3.

**8.** An ink jet recording apparatus, comprising:

an ink storage portion; and
a recording head for ejecting ink,
wherein the ink storage portion stores the ink according to any one of claims 1 to 3, and
wherein the recording head comprises the ink jet recording head according to claim 6 or 7.

FIG. 1A

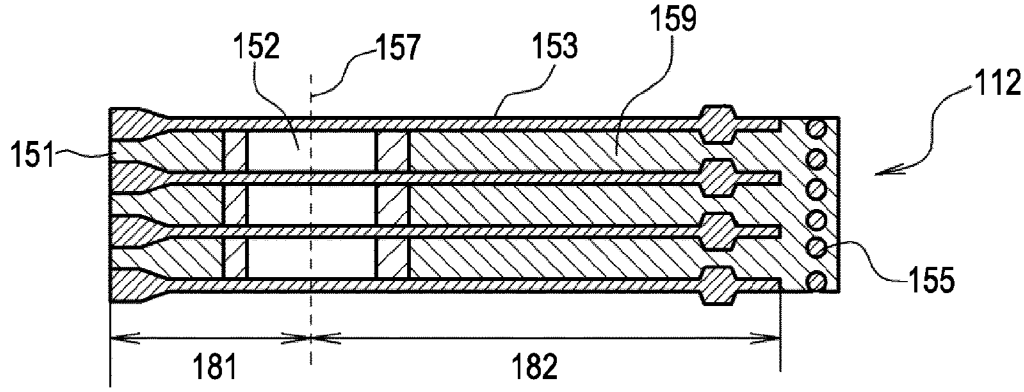


FIG. 1B

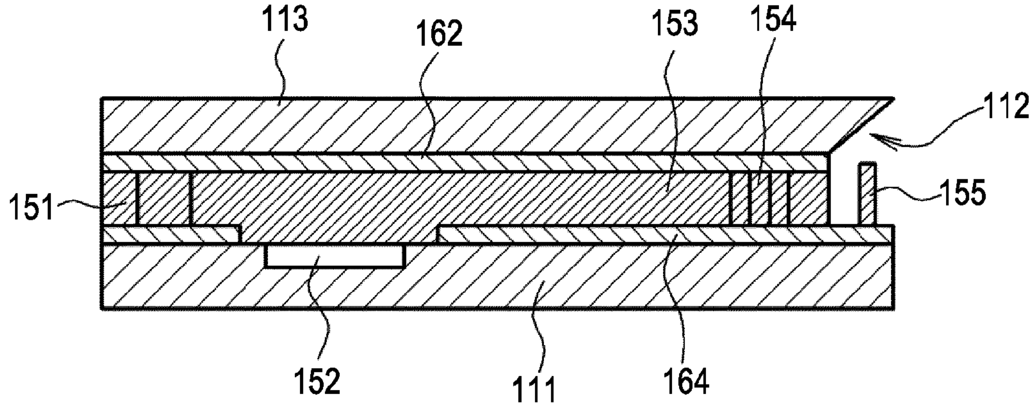


FIG. 1C

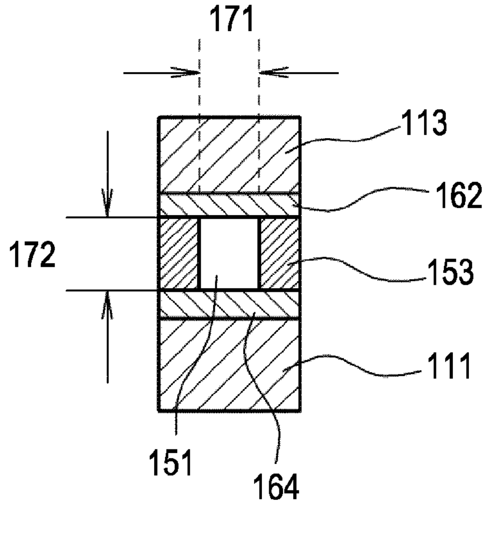

FIG. 2A

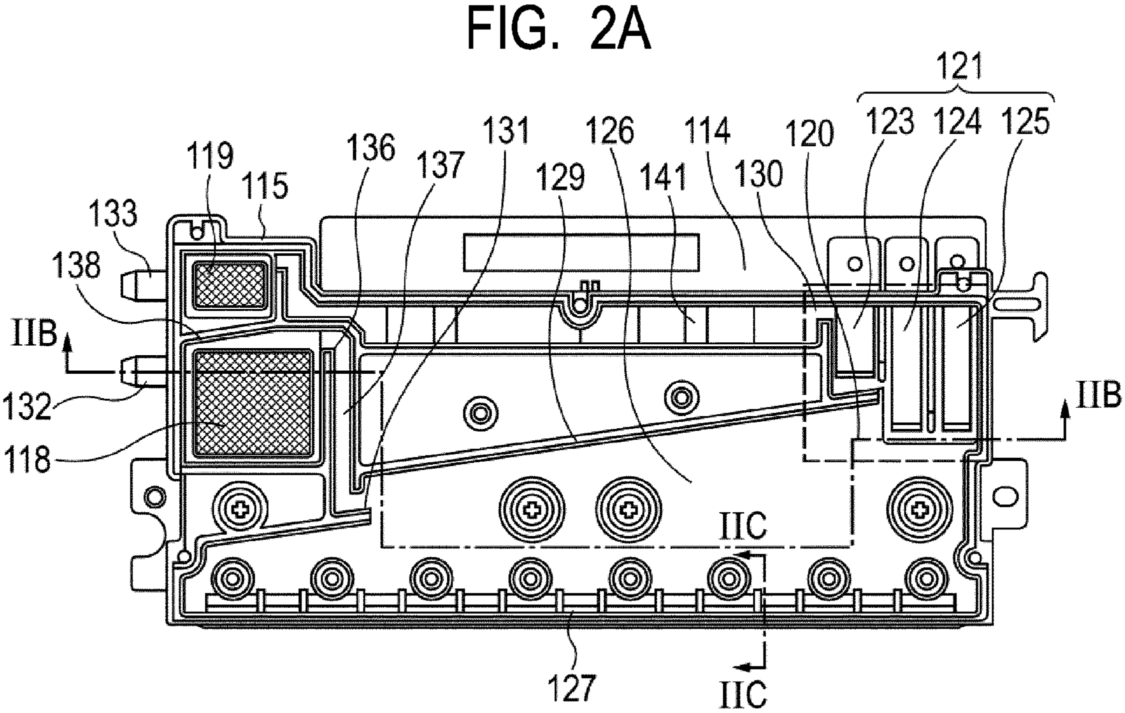


FIG. 2B

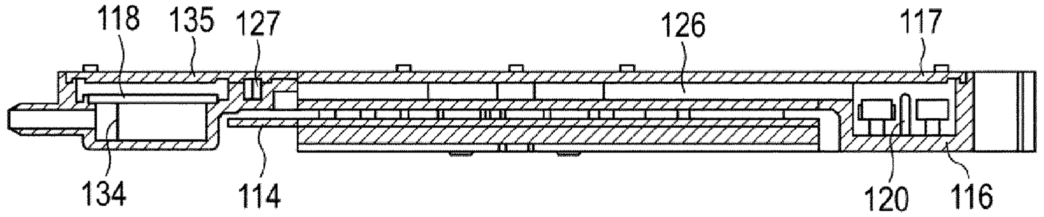


FIG. 2C

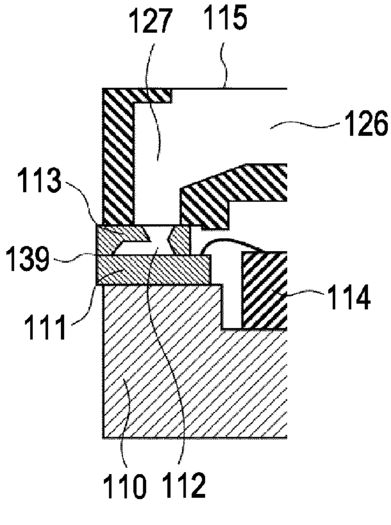

FIG. 3

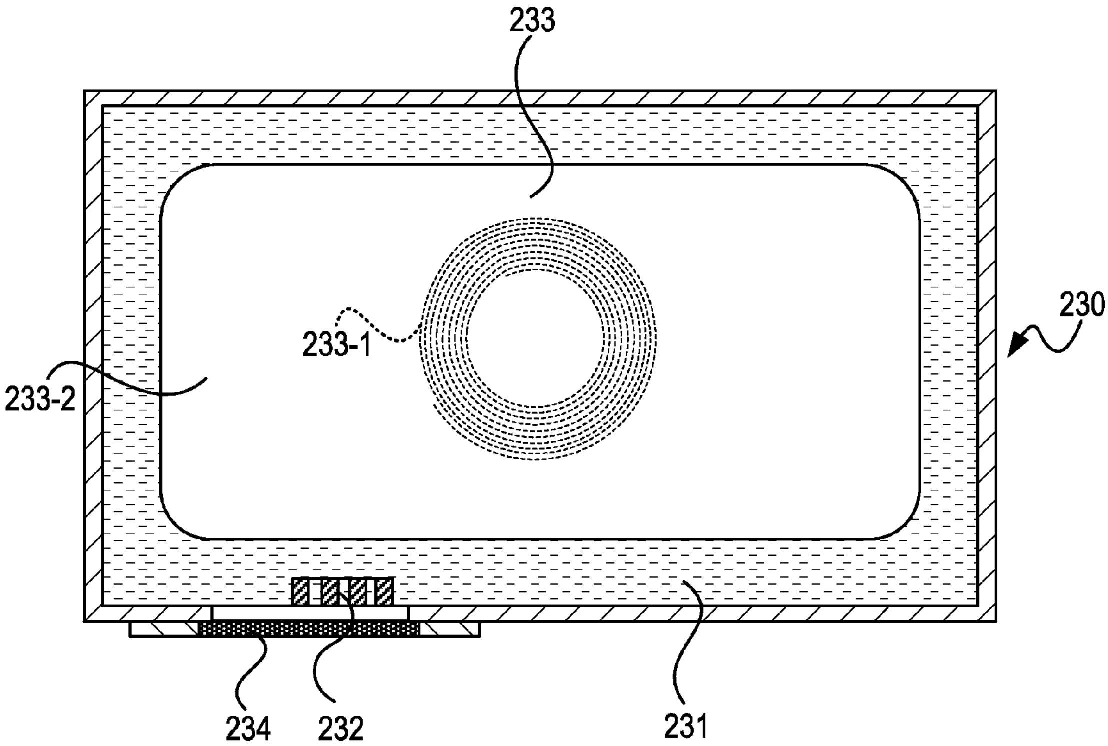
233
230
233-1
233-2
234
232
231

FIG. 4

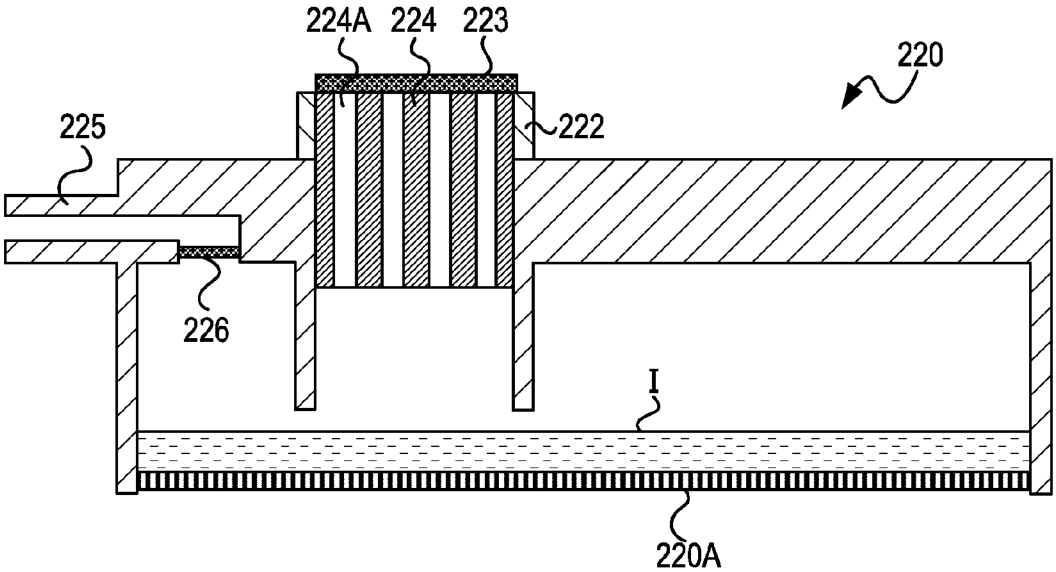
224A
224
223
220
225
222
226
I
220A

FIG. 5A

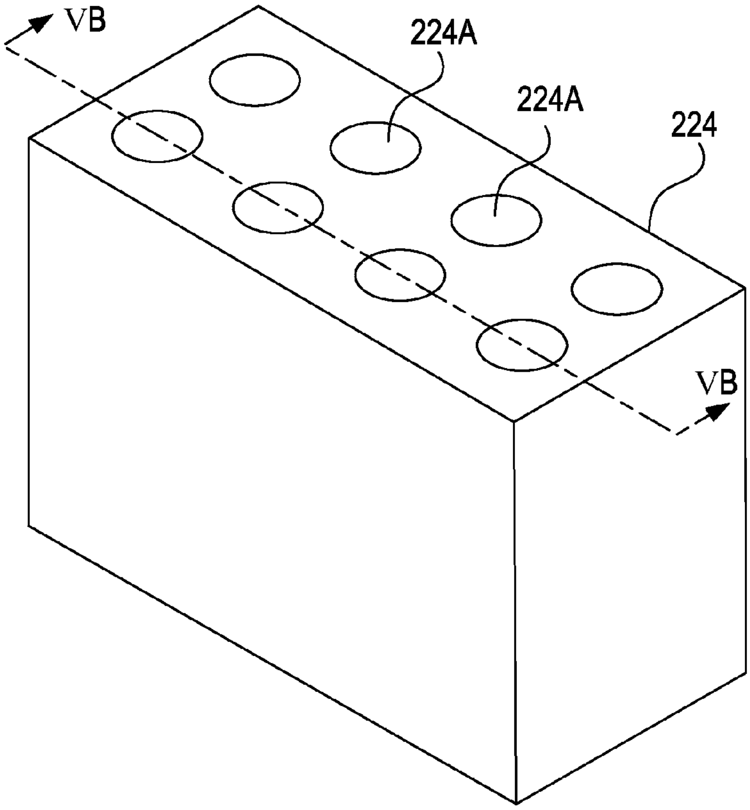


FIG. 5B

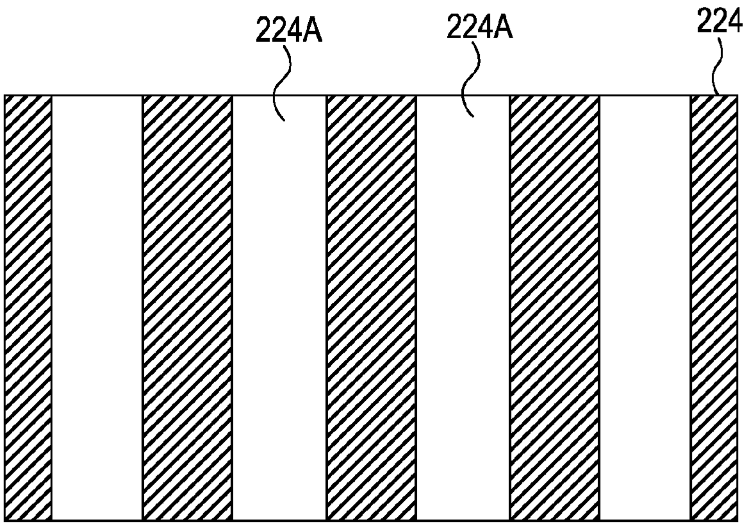

FIG. 6

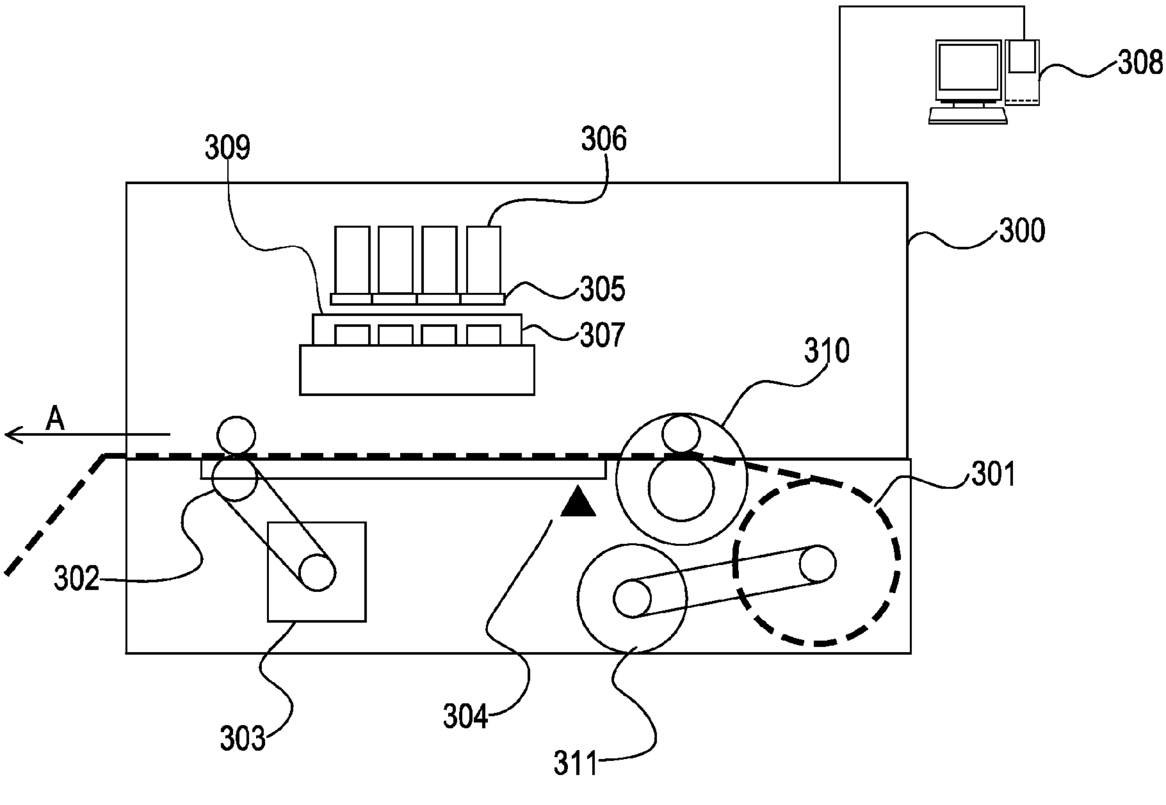

FIG. 7

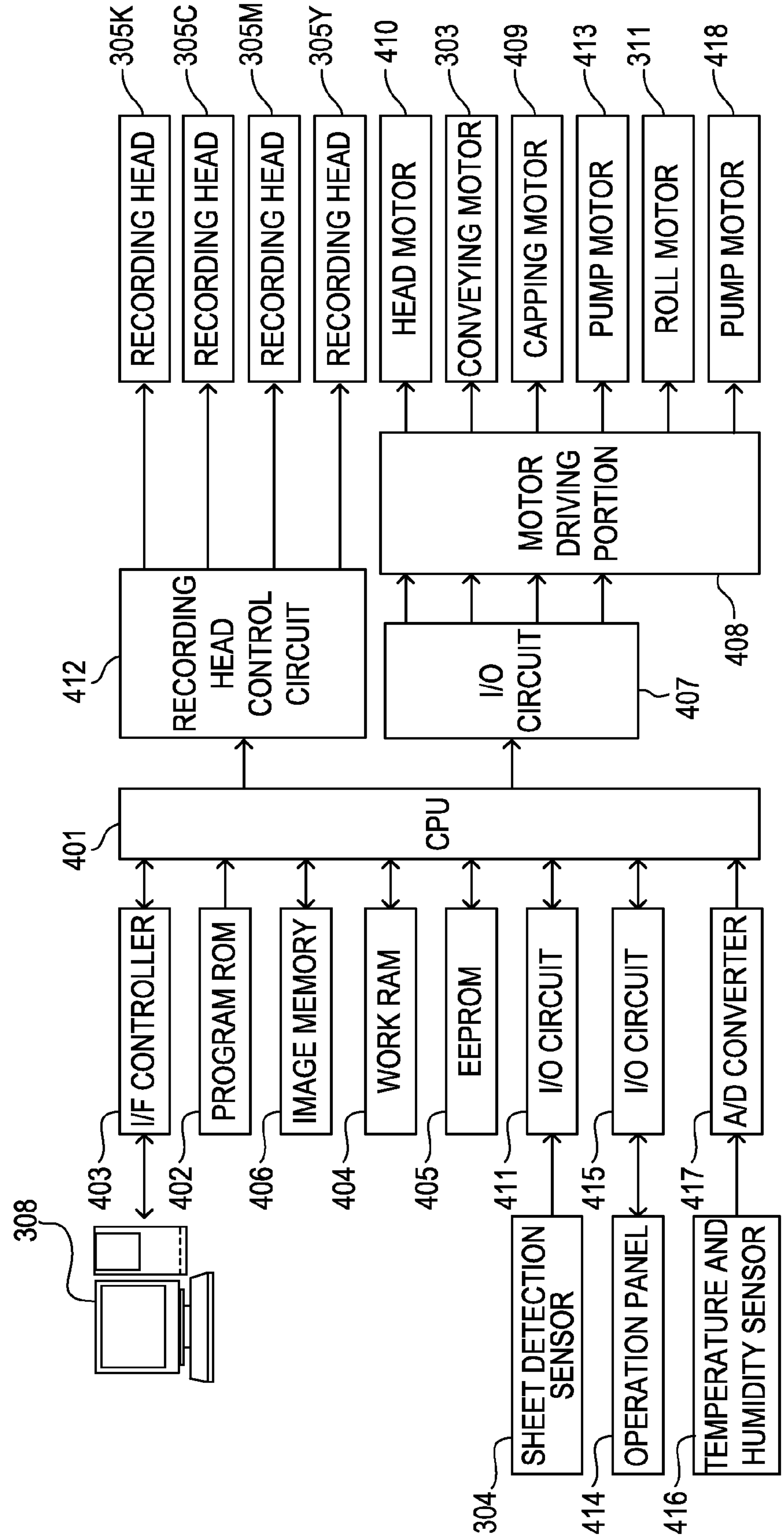
308
403
I/F CONTROLLER
402
PROGRAM ROM
406
IMAGE MEMORY
404
WORK RAM
405
EEPROM
411
I/O CIRCUIT
415
I/O CIRCUIT
417
A/D CONVERTER
304
SHEET DETECTION SENSOR
414
OPERATION PANEL
416
TEMPERATURE AND HUMIDITY SENSOR
401
CPU
412
RECORDING HEAD CONTROL CIRCUIT
I/O CIRCUIT
407
MOTOR DRIVING PORTION
408
RECORDING HEAD
305K
RECORDING HEAD
305C
RECORDING HEAD
305M
RECORDING HEAD
305Y
HEAD MOTOR
410
CONVEYING MOTOR
303
CAPPING MOTOR
409
PUMP MOTOR
413
ROLL MOTOR
311
PUMP MOTOR
418

FIG. 8

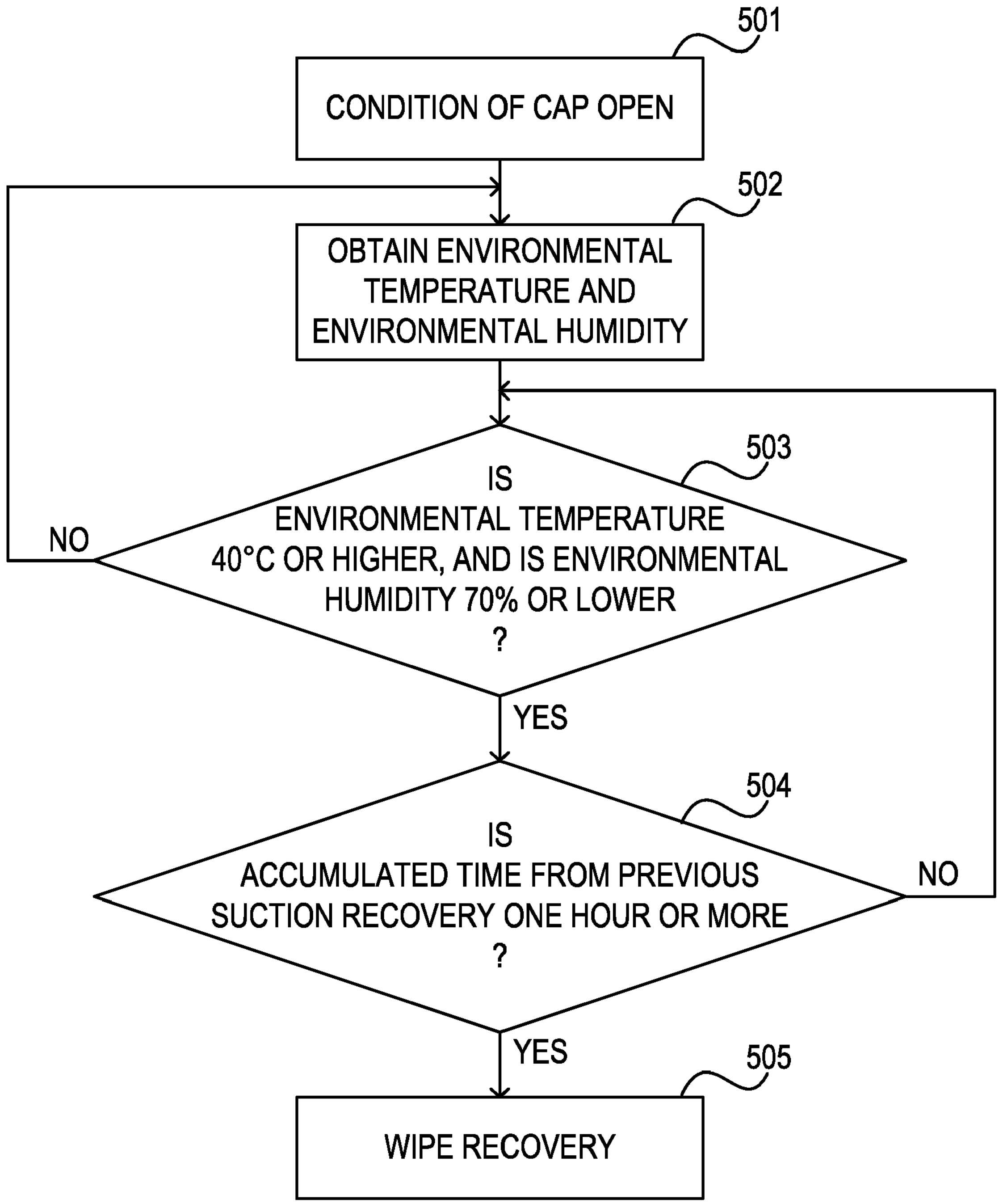
501
CONDITION OF CAP OPEN
502
OBTAIN ENVIRONMENTAL TEMPERATURE AND ENVIRONMENTAL HUMIDITY
503
IS ENVIRONMENTAL TEMPERATURE 40°C OR HIGHER, AND IS ENVIRONMENTAL HUMIDITY 70% OR LOWER ?
NO
YES
504
IS ACCUMULATED TIME FROM PREVIOUS SUCTION RECOVERY ONE HOUR OR MORE ?
NO
YES
505
WIPE RECOVERY

Europäisches Patentamt
European Patent Office
Office européen des brevets

# EUROPEAN SEARCH REPORT

Application Number
EP 14 18 3651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 792 494 A1 (CANON FINETECH INC [JP]) 22 October 2014 (2014-10-22)<br>* examples 23, 24 *<br>* paragraph [0228] - paragraph [0232] *<br>* paragraph [0057] - paragraph [0065] *<br>* paragraph [0090] - paragraph [0093] *<br>* paragraph [0097] *<br>----- | 1-8 | INV.<br>C09D11/033<br>C09D11/30 |
| X | US 2010/033522 A1 (SAITO TAKASHI [JP] ET AL) 11 February 2010 (2010-02-11)<br>* examples 155, 166; tables [8-14] *<br>* paragraph [0189] *<br>* paragraph [0306] *<br>----- | 1-8 | |
| X | EP 1 995 287 A1 (CANON KK [JP]) 26 November 2008 (2008-11-26)<br>* paragraph [0095] - paragraph [0097]; examples 19, 20; table 2 *<br>* paragraph [0066] - paragraph [0087] *<br>----- | 1-8 | |
| X | JP 2012 031350 A (CANON KK) 16 February 2012 (2012-02-16)<br>* abstract *<br>* tables [1-1]-[1-4] *<br>----- | 1-8 | TECHNICAL FIELDS SEARCHED (IPC)<br>C09D<br>B41J |
| X | EP 1 285 949 A1 (CANON KK [JP]) 26 February 2003 (2003-02-26)<br>* examples inks C2,C3; table 1 *<br>* paragraph [0100]; example 3 *<br>----- | 1-8 | |
| X | EP 1 595 923 A1 (CANON KK [JP]) 16 November 2005 (2005-11-16)<br>* paragraph [0097] - paragraph [0098]; examples 12, 13 *<br>* paragraph [0067] - paragraph [0081]; figures 1-8 *<br>-----<br>-/-- | 1-8 | |

The present search report has been drawn up for all claims

1

| Place of search | Date of completion of the search | Examiner |
|---|---|---|
| Munich | 19 January 2015 | Inzenhofer, Kathrin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 14 18 3651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 956 059 A2 (CANON KK [JP]) 13 August 2008 (2008-08-13) * paragraph [0300] - paragraph [0302]; example 1 * * paragraph [0093] - paragraph [0113] * ----- | 1-8 | |
| X | US 6 153 001 A (SUZUKI ATSUSHI [JP] ET AL) 28 November 2000 (2000-11-28) * examples II-4 * * column 35, line 37 - column 36, line 3 * ----- | 1-8 | |
| X | US 2009/274840 A1 (YAMAKAMI HIDEKI [JP] ET AL) 5 November 2009 (2009-11-05) * examples 1, 9, 12; table 3 * ----- | 1-8 | |
| X | Canon: "LX-P5500 Technical specifications", , 9 April 2013 (2013-04-09), pages 1-3, XP055161561, Retrieved from the Internet: URL:https://web.archive.org/web/20130409012822/http://cweb.canon.jp/labelprinter/lineup/p5500/spec.html [retrieved on 2015-01-13] * the whole document * ----- | 4-8 | TECHNICAL FIELDS SEARCHED (IPC) |
| X | Canon: "LX-D5500 Technical specifications", , 15 July 2013 (2013-07-15), pages 1-3, XP055161555, Retrieved from the Internet: URL:https://web.archive.org/web/20130715030930/http://cweb.canon.jp/labelprinter/lineup/d5500/spec.html [retrieved on 2015-01-13] * the whole document * ----- | 4-8 | |

The present search report has been drawn up for all claims

1

| Place of search | Date of completion of the search | Examiner |
|---|---|---|
| Munich | 19 January 2015 | Inzenhofer, Kathrin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 18 3651

This annex lists the patent family members relating to the patent documents cited in the above-mentioned European search report. The members are as contained in the European Patent Office EDP file on
The European Patent Office is in no way liable for these particulars which are merely given for the purpose of information.

19-01-2015

| Patent document cited in search report | Publication date | Patent family member(s) | Publication date |
|---|---|---|---|
| EP 2792494 A1 | 22-10-2014 | EP 2792494 A1 | 22-10-2014 |
| | | US 2014313265 A1 | 23-10-2014 |
| US 2010033522 A1 | 11-02-2010 | JP 2010059401 A | 18-03-2010 |
| | | US 2010033522 A1 | 11-02-2010 |
| EP 1995287 A1 | 26-11-2008 | EP 1995287 A1 | 26-11-2008 |
| | | JP 5441354 B2 | 12-03-2014 |
| | | JP 2009001775 A | 08-01-2009 |
| | | US 2008292793 A1 | 27-11-2008 |
| JP 2012031350 A | 16-02-2012 | NONE | |
| EP 1285949 A1 | 26-02-2003 | AT 396236 T | 15-06-2008 |
| | | CN 1403512 A | 19-03-2003 |
| | | EP 1285949 A1 | 26-02-2003 |
| | | KR 20030025170 A | 28-03-2003 |
| | | TW I225882 B | 01-01-2005 |
| | | US 2003109600 A1 | 12-06-2003 |
| EP 1595923 A1 | 16-11-2005 | AT 442424 T | 15-09-2009 |
| | | AU 2003246202 A1 | 09-09-2004 |
| | | CN 1742061 A | 01-03-2006 |
| | | EP 1595923 A1 | 16-11-2005 |
| | | ES 2328566 T3 | 16-11-2009 |
| | | JP 4721403 B2 | 13-07-2011 |
| | | US 2006021545 A1 | 02-02-2006 |
| | | WO 2004074390 A1 | 02-09-2004 |
| EP 1956059 A2 | 13-08-2008 | EP 1956059 A2 | 13-08-2008 |
| | | US 2008187726 A1 | 07-08-2008 |
| US 6153001 A | 28-11-2000 | NONE | |
| US 2009274840 A1 | 05-11-2009 | JP 5590813 B2 | 17-09-2014 |
| | | JP 2009287003 A | 10-12-2009 |
| | | US 2009274840 A1 | 05-11-2009 |
| | | US 2013300802 A1 | 14-11-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S61157566 B
- JP 2011195826 A
- JP 4956917 B
- JP 2011140636 A
- JP 2006143989 A
- JP H0625573 B
- EP 0468647 A1
- EP 0468648 A1
- EP 0468649 A1
- JP 2013014111 A